# EUROPÄISCHE PATENTSCHRIFT

(11) **EP 0 438 186 B1**
(45) Veröffentlichungstag und Bekanntmachung des Hinweises auf die Patenterteilung: **15.02.1995**
(21) Anmeldenummer: 91104850.2
(22) Anmeldetag: 03.06.1988
(51) Int. Cl.: A47C 7/20, A47C 7/26, B60N 2/00

(54) **Sitz mit einem Polster aus Schaumkunststoff**
Seat with upholstery made of synthetic foam material
Siège avec rembourrage en matière synthétique mousse

(30) Priorität: 02.06.1987 AT 1396/87; 09.12.1987 AT 3224/87; 20.04.1988 AT 1005/88
(43) Veröffentlichungstag der Anmeldung: 24.07.1991
(62) Teilanmeldung aus: 88904381.6
(73) Patentinhaber: C.A. GREINER & SÖHNE GESELLSCHAFT M.B.H., A-4550 Kremsmünster (AT)
(72) Erfinder: Weingartner, Rudolf, A-4501 Neuhofen a.d. Krems (AT); Möseneder, Johann, A-4710 Grieskirchen (AT); Eder, Bernhard, A-4020 Linz a. d. Donau (AT)
(74) Vertreter: Secklehner, Günter, Dr.

(56) Entgegenhaltungen:
- DE-A- 3 111 839
- US-A- 3 142 515
- US-A- 3 310 819
- US-A- 3 425 068
- US-A- 4 463 465

## Beschreibung

Die Erfindung betrifft einen Sitz, insbesondere für Fahrzeuge, wie er im Oberbegriff der Patentansprüche 1 und 2 beschrieben ist.

Bei einem bekannten Fahrzeugsitz - gemäß DE-A 31 11 839 - ist eine Hartschaumschale bzw. ein Auflagerahmen mit Spannfedern vorgesehen, auf dem ein aus einer oder mehreren Schaumauflagen bestehender Sitzpolster angeordnet ist. Die Schaumschichten können aus einem schwer entflammbaren Material bestehen. Der Sitzpolster ist mit einer Brandschutzhülle ummantelt und auf der dem Benutzer zugewandten Seite mit einem schwer entflammbaren Bezugsstoff versehen. Die Schaumauflagen sind durch zwischengeschaltete Federelemente zwischen dem Traggestell des Sitzpolsters und dem Bezugsstoff gehaltert. Durch die Verspannung der beiden Schaumauflagen zwischen dem Bezugsstoff und den Federelementen werden diese auch im entlasteten Zustand, also wenn keine Person auf dem Sitzpolster sitzt zusammengedrückt, wodurch die Luftzirkulation durch den Sitz gering ist.

Aber auch bei den weiteren bekannten Sitzen - gemäß der US-A-3,142,515 - wird nur ein Kunststoffschaum verwendet der ein einheitliches Raumgewicht oder eine einheitliche Härte aufweist. Da nur eine einzige Kunststoffschicht aus einem einzigen Kunststoffschaum vorgesehen ist wird daher zur Versteifung vorgeschlagen, im Inneren dieses Sitzpolsters einen Federkern einzuschäumen. Durch die Verwendung nur einer einzigen Art von Kunststoffschaum ist die Abstimmung zwischen dem Sitzkomfort und einer ausreichenden Festigkeit nur schwer oder kaum beherrschbar.

Ein weiterer bekannter Sitz mit einem Polster aus Schaumkunststoff gemäß WO-A1-87/06894 der gleichen Anmelderin besteht aus einem Schaumkunststoff mit einem Stützkörper aus einem offenzelligen, elastischen Kunststoffschaum mit einem ersten Raumgewicht und einer Flammschutzschicht aus einem offenzelligen, mit Flammschutzmittel versehenen, elastischen Schaumkunststoff mit einem zweiten zum ersten unterschiedlichen Raumgewicht. Der Kunststoffschaum und die Flammschutzschicht sind miteinander, insbesondere durch einen Schäumvorgang, verbunden und mit einem schwer entflammbaren Bezugstoff umgeben. Um eine ausreichende Luftdurchlässigkeit eines derartigen Polsters zu erzielen, wurde auch vorgeschlagen, nach der Fertigstellung des Polsters bevorzugt erhitzte Nadeln durch diesen Polster hindurchzustoßen, sodaß ein entsprechender Luftaustausch möglich ist.

Diese Polster haben sich in der Praxis an sich sehr gut bewährt, es hat sich jedoch gezeigt, daß vor allem bei extremen Witterungsbedingungen oder unter verschiedenen klimatischen Verhältnissen der Sitzkomfort der Sitze für den geplanten Einsatzzweck in Fahrzeugen nicht ausreichend war.

Weiters sind bereits Sitze für öffentliche Verkehrsmittel be kannt gemäß DE-U-85 06 816 - die einen Sitzpolster aufweisen, der mit einem Sitzbezug abgedeckt ist, wobei der Sitzbezug und der Sitzpolster aus einem schwer entflammbaren und raucharmen Material besteht. Vielfach wird dabei so vorgegangen, daß zwischen dem schwer entflammbaren Sitzbezug und dem meist aus Kunststoffschaum bestehenden Sitzpolster eine Glasfasermatte angeordnet wird, die ein Durchbrennen des Sitzbezuges in Richtung des Sitzpolsters verhindern soll. Dabei hat sich jedoch gezeigt, daß in vielen Fällen die Flammeinwirkung vom Boden her entsteht und der Kunststoffschaum des Sitzpolsters dazu neigt, unter starker Rauchentwicklung zu verbrennen, wodurch die öffentlichen Verkehrsmittel im Brandfall in kürzester Zeit so verqualmt sind, daß eine Orientierung für Insassen kaum mehr möglich ist. Dementsprechend ist bei diesem bekannten Sitz vorgesehen, daß unterhalb des Sitzpolsters in dem Traggestell des Sitzes eine feuerhemmende Platte angeordnet wird. Dies bedingt die Verwendung eines speziellen Profiles zur Halterung des Sitzpolsters sowie einen zusätzlichen Aufwand durch die Anordnung der feuerhemmenden Platte. Auch bei dieser Ausführungsform konnte die Sitzbelüftung nicht befriedigen.

Sitze mit Polster aus Schaumkunststoff sind im modernen Fahrzeugbau sehr weit verbreitet. Vor allem werden sie in Schienen- und Straßenfahrzeugen aber in überwiegendem Maß auch in Flugzeugen eingesetzt. Während bereits die für Schienenfahrzeuge geltenden Vorschriften hinsichtlich der selbstverlöschenden Ausbildung der verwendeten Materialien bzw. der Rauchentwicklung sehr strenge Richtlinien vorschreiben, so werden diese von den in der Flugzeugindustrie geltenden Vorschriften aber noch übertroffen. So ist bei für den Einsatz in Flugzeugen zugelassenen Sitzen eine Prüfung vorgeschrieben, bei der die Polster in ihrer zum Einbau vorgesehenen Ausstattung einer Flamme aus einem Brenner direkt ausgesetzt werden. Diese Flamme wirkt über eine Zeitdauer von 2 Minuten direkt auf den Polster ein, wonach die Flamme verlöscht bzw. entfernt wird. Der Polster wird, falls bis dahin die Flammen nicht selbst erloschen sind, nach 5 Minuten gelöscht. Nach diesem Brandtest darf der Gewichtsverlust des Polsters nicht höher als 10 % sein. Um diese äußerst strengen Vorschriften zu erfüllen und gleichzeitig auch einen hohen Sitzkomfort bei den lang andauernden Flugreisen und ein geringes Gewicht zu erzielen, wurden Sitzpolster aus verschiedenen, mit Flammschutzmitteln versehenen, offenzelligen, elastischen Weichschaumstoffen mit unterschiedlichen Raumgewichten zusammengeklebt.

Ein derartiger bekannter Fahrzeugsitz - gemäß EP-A1 190 064 - besteht aus mehreren Lagen Nadelvlies, die von einem flammfesten Bezugstoff umhüllt sind. Zwischen dem Bezugstoff und den einzelnen Lagen aus Nadelvlies sind zur Verringerung von Schäden durch Vandalen Verstärkungsmatten aus Metall bzw. Glasfasern angeordnet. Durch das Verkleben der einzelnen Schichten und die vielfachen Zwischenlagen dieser Vandalenschutzschicht ist bei dem bekannten Fahrzeugsitz eine ausreichende Durchlüftung noch schwerer erzielbar.

Bei einem anderen bekannten Sitz für Flugzeuge ist, um die komplizierte räumliche Formgebung der Sitzpolster einfacher zu realisieren, der Stützkörper aus einem mit Flammschutzmitteln versetzten in einer Form einstückig geschäumten Teil gebildet, dessen Oberfläche mit einer Flammschutzschicht und danach mit einem flammfesten Bezugstoff überzogen wird. Mit den bekannten Sitzen konnten jedoch die neuen verschärften Sicherheitsbestimmungen und Prüfvorschriften für Flugzeugsitze nicht erfüllt werden.

Bei einem weiteren bekannten Fahrzeugsitz - gemäß DE-A 31 11 839 - ist eine Hartschaumschale bzw. ein Auflagerahmen mit Spannfedern vorgesehen, auf dem ein aus einer oder mehreren Schaumauflagen bestehender Sitzpolster angeordnet ist. Die Schaumschichten können aus einem schwer entflammbarem Material bestehen. Der Sitzpolster ist mit einer Brandschutzhülle ummantelt und auf der dem Benutzer zugewandten Seite mit einem schwer entflammbaren Gewebeüberzug versehen. Durch die Verwendung schwer entflammbarer Materialien und dem Brandschutzüberzug wird zwar eine geringfügigere Verbesserung des Abbrandverhaltens erzielt, der Volumensverlust bei der Einwirkung einer offenen Flamme auf die verschiedenen Schaumstoffschichten kann durch einen derartigen Aufbau jedoch nicht verringert werden.

Der Erfindung liegt die Aufgabe zugrunde, einen Sitz für Fahrzeuge, insbesondere Verkehrsmittel, wie Schienenfahrzeuge bzw. Flugzeuge, zu schaffen, der eine ausreichende Luftdurchlässigkeit und somit ein günstiges Sitzklima ermöglicht.

Diese Aufgabe der Erfindung wird durch die Merkmale im Kennzeichenteil des Patentanspruches 1 gelöst. Diese Lösung bringt den Vorteil, daß bei der durch die Anordnung des Federkerns im Inneren des Stützkörpers, bei jeder Bewegung des Benutzers am Sitzpolster folgenden Dehnungsbewegung zurück in den ursprünglich unbelasteten Zustand ein Luftaustausch zwischen dem Inneren des Stützkörpers und den Ausnehmungen erfolgt. Dadurch wird ein größerer Querschnittsbereich des Stützkörpers in kürzerer Zeit durchlüftet und damit insbesondere eine größere Menge an Feuchtigkeit, insbesondere Wasserdampf und dgl. wie sie sich insbesondere in Flugzeugsitzen aufgrund der menschlichen Ausdünstungen und der ständig wechselnden starken Klimaunterschiede zwischen heißer, feuchter, d.h. mit Wasserdampf gesättigter Luft und trockener, kalter Luft ansammelt abgeführt. Vor allem sind diese wesentlichen Vorteile für die im Langstreckenverkehr eingesetzten Luftfahrzeuge wichtig, in welchen es neben den krassen Klimawechseln zwischen den Abflug- und Ankunftsorten noch zusätzlich durch eine lange Benutzungsdauer, beispielsweise zwischen 8 und 16 Stunden zu einer hohen Feuchtigkeitszufuhr durch die Körperausdünstungen des Benutzers kommt. Dadurch können die Vorteile, die durch eine höhere Tragkraft des Stützkörpers aufgrund des darin eingeschäumten Federkerns, entstehen, dazu genützt werden, um Ausnehmungen anzuordnen die sonst zu einer nicht mehr zulässigen Schwächung des Stützkörpers führen würden und die in Kombination mit den durch den Federkern bedingten Pumpeffekten im Inneren des Stützkörpers zu einer rascheren Entfeuchtung und Trockenhaltung führen. Vor allem kann dadurch auch das Zusammenkleben der Zellwände der Zellstruktur im Stützkörper bei zu höher Überfeuchtung und zu langer Benutzungsdauer verhindert werden. Gleichzeitig wird dadurch das Leergewicht eines derartigen Sitzes relativ nieder gehalten, da eine Gewichtszunahme durch eine zu hohe Speicherung an Feuchtigkeit bzw. Flüssigkeit im Sitzpolster verhindert wird.

Die Aufgabe der Erfindung wird aber auch durch die Merkmale im Kennzeichenteil des Patentanspruches 2 gelöst. Durch die erzielten Kombinationsvorteile ist es möglich, die Härte des Stützkörpers in den an den Federkern anschließenden Bereichen höher zu halten, sodaß keine Beeinträchtigung des Sitzkomforts beim Übergang zwischen Federkern und normalen, nicht verstärkten Stützkörpermaterial kommt. Dazu kommt, daß der Härtebereich des Kunststoffschaums des Stützkörpers in höheren Bereichen varierbar ist und vor allem auch härter sein kann, da das subjektive Stitzgefühl und Bequemlichkeitsgefühl des Sitzpolsters durch die zusätzliche Flammschutzschicht zwischen dem Stützkörper und dem Bezugsstoff in einfacher Weise reguliert werden kann. Damit kann aber auch verhindert werden, daß die durch den Federkern bewirkten verstärkten Bereiche für den Benutzer des Flugzeugsitzes als unangenehm empfunden werden, da über die auch mit geringerem Raumgewicht und auch mit geringerer Härte herstellbare Flammschutzschicht eine Abdeckung der durch den Federkern versteiften Bereich erzielt ist und auch in Bereichen des Federkerns Druckstellen ausgeschaltet sind. Ein weiterer Vorteil dieser Lösung liegt darin, daß ein Teil der Feuchtigkeit bereits in der Flammschutzschicht, also in den Oberflächenbereichen des Sitzpolsters abgefangen werden kann und damit die Feuchtigkeitsaufnahme im Stützkörper herabgesetzt werden kann. Es wird aber der Trocknungseffekt der Flammschutzschicht durch die ständig wiederkehrende Dehnung und Rückführung des Sitzpolsters in den ursprünglichen Ausgangszustand verstärkt, da damit auch die Flammschutzschicht immer wieder gedehnt und rückgestellt wird und damit die Entfeuchtung bzw. die Abfuhr der Feuchtigkeit aus dieser Flammschutzschicht zusätzlich unterstützt wird.

Vorteilhaft ist weiters, eine Ausbildung nach Patentanspruch 3, da dadurch bereits von Anfang an eine nachteilige Veränderung des Sitzkomoforts verhindert werden kann, Durch die Wahl des Abstandes zwischen der Oberseite des Stützkörpers und der Deckfläche des Federkerns kann überdies die Ferderungscharakteristik des Sitzes den einzelnen Kundenwünschen besser angepaßt werden.

Es ist aber auch eine Weiterbildung nach Patentanspruch 4 von Vorteil. Dadurch kommt der Federkern bei Personen mit geringerem Gewicht kaum zum Tragen, während er bei der Benutzung durch Personen mit höherem Gewicht einen Teil des Gewichtes aufnimmt und damit die Kunststoffstruktur des Stützkörpers vor Überbelastungen bewahrt.

Vorteilhaft ist weiters, die Ausführung nach Patentanspruch 5, da durch die Veränderung der Distanz zwischen Basisfläche und Deckfläche die Federcharakteristik des Federkerns verändert werden kann.

Eine andere vorteilhafte Ausgestaltung ist nach Patentanspruch 6 vorgesehen. Durch diese Anordnung des Federkerns wird erreicht, daß im Falle eines Brandes der Federkern durch den ihn umgebenden Kunststoffschaum isoliert ist und damit die Temperaturzunahme des Federkerns verringert wird. Dadurch kann über lange Zeit verhindert werden, daß der Federkern zu glühen beginnt. Weiters können Rückzündungen durch den glühenden Federkern dann, wenn das Feuer durch die selbstverlöschenden Eigenschaften des Stützkörpers bzw. der Flammschutzschicht von selbst verlöscht, vermieden werden. Durch die senkrecht zur Oberfläche verlaufenden Ausnehmungen wird ein ausreichender Luftaustausch erreicht, wobei durch die senkrecht zu den Seitenflächen des Sitzpolsters verlaufenden Ausnehmungen, diese bei Benutzung des Sitzes durch eine Person zusammengedrückt werden können, sodaß sie in Art eines Blasbalges wirken und zu einer Zwangsentlüftung bzw. Belüftung des Sitzes führen. Dies vor allem auch deshalb, da durch die Erschütterungen des Fahrzeuges bzw. Bewegungen des Benutzers am Sitz oder durch Verlagerungen des Körpers der den Sitz benutzenden Person auch während der Benutzung ein ausreichender Luftaustausch über diese Ausnehmungen erfolgen kann.

Nach einer Weiterbildung ist vorgesehen, daß die Zwischenlage, z. B. ein Gitter aus Draht oder Glasfasern, eine hohe Eigensteifigkeit hat und die Deckfläche brückenartig überspannt. Durch die Verwendung einer eigensteifen Zwischenlage wird die Belastung durch die den Sitz benutzende Person, unabhängig von der Sitzposition, möglichst gleichmäßig auf die Stützvorrichtung übertragen, wodurch insgesamt einseitige Belastungen der Stützvorrichtungen und damit des Stützkörpers, die zu einem erhöhten Verschleiß des Stützkörpers führen könnten, vermieden werden.

Nach einer anderen Ausführungsform ist vorgesehen, daß die Stützvorrichtung mit einer Basisfläche auf der Zwischenschicht aufliegt bzw. abgestützt ist, wodurch ohne zusätzliche mechanische Konstruktion verhindert werden kann, daß auch bei länger andauernden Belastungen die Stützvorrichtung nicht durch den Stützkörper hindurch gedrückt werden kann.

Weiters ist es auch möglich, daß eine Dichte des Kunststoffschaums des Stützkörpers im Bereich zwischen der Deckfläche und der Zwischenlage bzw. einer Zwischenschicht höher ist, als die Dichte des Schaumkunststoffes in den übrigen Bereichen des Stützkörpers, wodurch aufgrund der höheren Dichte des Kunststoffschaums zusätzlich eine gleichmäßigere Verteilung der durch den Benutzer des Sitzes auf diesen ausgeübten Belastungen erzielt werden kann.

Nach einer vorteilhaften weiteren Ausführungsvariante ist die Stützvorrichtung in einer luftdichten Kunststoffolie eingebettet, wodurch der Sitz als Rettungsschwimmkissen verwendet werden kann, wodurch zusätzliche Vorkehrungen bzw. Ausstattungsteile wie Schwimmflösse, usw., insbesondere dann, wenn der Sitz in Flugzeugen eingesetzt wird, eingespart werden können.

Vorteilhaft ist es aber auch , wenn zwischen dem Stützkörper und der gegebenenfalls durch einen Bezugsstoff gebildeten Flammschutzschicht eine flammfeste, aus gitterbzw. netzförmig verlegten hochtemperaturbeständigen Fasern bzw. Fäden gebildete Zwischensicht angeordnet ist. Durch diese flammfeste Zwischenschicht, wird in überraschender Weise erreicht, daß sich die verschmorten Restbestandteile der Flammschutzschicht auf de hochtemperaturfesten Fasern oder Fäden festsetzen können, wodurch das Eindringen der Flammen in den dahinterliegenden Schaumkunststoff des Stützkörpers zusätzlich erschwert wird. Ein weiterer überraschender Vorteil dieser Lösung liegt darin, daß diese hochtemperaturfesten Fasern bzw. Fäden eine gute Wärmeisolation bewirken und einen direkten Wärmeübergang zwischen der im Bereich der Flammen verschmorenden Flammschutzschicht und dem dahinter angeordneten Kunststoffschaum des Stützkörpers verzögern, und somit auch der Schaum des Stützkörpers durch die Wärmeeinwirkung nicht zusammenfallen kann. Die direkte Entzündung des Kunststoffschaums im Bereich des Stützkörpers durch die hohe Temperatur wird durch die zugesetzten Flammschutzmittel verhindert. Ein weiterer überraschender Effekt der erfindungsgemäßen Lösung liegt aber vor allem darin, daß es nunmehr auf die Ausbildung und Zusammensetzung des Bezugstoffes nicht mehr wesentlich ankommt, da eine Flammschutzwirkung bereits durch Verbundwirkung der Flammschutzschicht mit dem Stützkörper und der dazwischen angeordneten Zwischenschicht erreicht werden kann. Die netz- bzw. gitterförmige Struktur der hochtemperaturbeständigen Fasern bzw. Fäden bildet eine zusätzliche Schutzwirkung gegen die außen auf den Polster einwirkenden Flammen, da die Flamme das Netz nur schwer durchdringen kann. Darüber hinaus kann es, nachdem die direkte Flammeneinwirkung beendet ist, nicht mehr zu einem Rückschlag der Flammen vom Polsterinneren auf die Außenseite kommen.

Von Vorteil ist aber auch eine Ausbildung, bei der die Zwischensicht durch ein Netz oder Gewirke aus Fäden und bzw. oder Fasern oder einem schwer entflammbaren Stoff gebildet ist oder bei der die Zwischenschicht durch ein Gitter aus Fäden und bzw. oder Fasern gebildet ist. Durch die höhere Festigkeit der Zwischenschicht wird ein Durchbrennen derselben noch zusätzlich erschwert.

Vorteilhaft ist aber auch eine Ausbildung, bei der eine Maschenweite der Gitter bzw. Netze oder Gewirke ca. 0,5 bis 8 mm, bevorzugt 3 mm beträgt, da mit den beim Abbrand der Flammschutzschicht verbleibenden verkohlten Restmaterialien auf dem Netz bzw. Gitter der Zwischenschicht eine dichte Schutz- bzw. Rußschicht gebildet werden kann, die von den Flammen nicht so rasch durchdrungen wird.

Vorteilhaft ist aber auch, wenn die Fasern bzw. Fäden aus Glas und bzw. oder Keramik bestehen oder wenn die Fasern bzw. Fäden aus Metall und bzw. oder Kohle bestehen, da dadurch ein Zerschmelzen der tragenden Teile der Zwischenschicht vermieden und damit ein Zusammenfallen derselben verhindert wird.

Nach einer anderen Ausführungsvariante ist vorgesehen, daß der Bezugsstoff auf die Zwischensicht aufkaschiert ist und vorzugsweise eine zwischen dem Bezugstoff und der Zwischenschicht angeordnete Verbindungsschicht, z. B. eine Polyäther- oder Polyesterschaumschicht mit diesen verklebt ist. Diese Ausführungsform hat den Vorteil, daß die Einlageteile mit dem Bezugsstoff in ausreichender Menge und in der gewünschten Form vorgefertigt werden können, während knapp vor der Auslieferung erst der voluminöse Stützkörper aufgeschäumt werden kann. Durch die Verwendung eines Sandwichaufbaus erreicht jedoch der Bezugsstoff, nicht zuletzt durch die zwischen diesen und der Zwischenschicht angeordnete Verbindungsschicht, eine ausreichende Formfestigkeit, sodaß er ohne einen Formverlust gelagert werden kann.

Von Vorteil ist auch eine Weiterbildung nach Patentanspruch 7, die bewirkt, daß sich die hinter den verkohlten Resten der Flammschutzschicht befindliche Schicht des Stützkörpers aufgrund der hohen Strahlungs- bzw. Konvektionswärme nicht selbst entzünden kann.

Einen mehrfachen Vorteil bietet eine Ausführung, bei der das Raumgewicht des Kunststoffschaumes in etwa 15-60 kg/m3 beträgt, da dadurch einerseits eine höhere Festigkeit des Polsters in den stärker beanspruchten Bereichen und andererseits ein höherer Füllungsgrad mit pulverförmigen Flammschutzmitteln möglich wird.

Vorteilhaft ist es aber auch wenn die Zwischenschicht ein Gewicht von ca. 150-350 g/m2 und bzw. oder die Flammschutzschicht ein Raumgewicht von ca. 20-60 kg/m3 aufweist, da dadurch die Widerstandsfähigkeit gegen Feuer noch zusätzlich erhöht werden kann.

Nach einer weiteren vorteilhaften Ausgestaltung ist vorgesehen, daß unterschiedliche, voneinander distanzierte, parallel und bzw. oder senkrecht zu einer Oberfläche verlaufende Querschnittscheiben des Stützkörpers eine gleiche Dicke, ein unterschiedliches Gewicht und bzw. oder Verhältnis zwischen Ausnehmungen und Schaumkunststoff aufweisen. Durch diese Maßnahmen ist es möglich, neben einer Veränderung der Federcharakteristik des Sitzes bzw. des Stützkörpers, den Luftdurchtritt durch den Sitz, beispielsweise durch die Flammschutzschicht bzw. den Stützkörper, im gewünschten Maß zu verändern, um so die Luftdurchlässigkeit an den unterschiedlichen Aufbau der Schichten bzw. deren Dicke oder Dichte anpassen zu können. Zusätzlich kann durch diese Maßnahme noch das Gewicht der Sitze variiert werden, um dieses an unterschiedliche Gewichte der Stützschicht, beispielsweise wenn ein höhere Füllgrad mit pulverförmigen Flammschutzmittel erforderlich ist, anzupassen und in einer gewünschten Größenanordnung zu halten.

Eine andere Ausführungsvariante beschreibt Patentanspruch 8. Durch die Größe der Ausnehmungen und deren Anordnung bzw. Verteilung im Polster kann der Bereich der Sitzfläche widerstandsfähiger und steifer gestalteter werden während die daran anschließenden, sich bis zu den Seitenflächen erstreckenden Bereiche weicher und damit auch mit geringerem Gewicht ausgebildet werden können. Zusätzlich ist es durch die Wahl und Lage der Ausnehmungen möglich, den Luftdurchsatz durch den Sitz senkrecht zur Oberfläche, also durch die Flammschutzschicht hindurch, in weiten Bereichen zu variieren.

Vorteilhaft ist weiters eine Ausbildung nach Patentanspruch 9, da damit auch durch den Bereich, in welchem der Federkern angeordnet ist, eine ausreichende Luftmenge durch den Sitz abgeführt werden kann, sodaß das Sitzklima eines derartigen Sitzes durch den Federkern nicht nachteilig beeinflußt wird.

Durch die Weiterbildung nach Patentanspruch 10 wird verhindert, daß sich der Federkern im Falle eines Brandes auch nicht durch die heißen Brandgase allzu rasch erwärmen kann, wodurch die Rückzündsicherheit noch erhöht werden kann.

Durch eine weitere vorteilhafte Ausgestaltung nach Patentanspruch 11 wurde eine Entzündung des Stützkörpers im Bereich der Oberfläche der Ausnehmungen zuverlässig verhindert. Als überraschender Vorteil kommt jedoch auch noch hinzu, daß durch die innerhalb des Stützkörpers vorhandenen Luftsäulen eine zusätzliche Isolierung gegen die Weiterleitung der durch die Flammen erzeugten Hitze entsteht, sodaß der Kunststoffschaum im Bereich des Stützkörpers einer höheren Brandbelastung Widerstand leisten kann.

Zum besseren Verständnis der Erfindung wird diese nachfolgen, anhand der in den Zeichnung dargestellten Ausführungsbeispiele, näher erläutert.

Es zeigen:
- Fig. 1: eine Doppelsitzbank mit zwei erfindungsgemäßen Sitzen für zwei Personen in schaubildlicher Darstellung;
- Fig. 2: einen Polster für eine Rückenlehne des Sitzes nach Fig. 1 in Seitenansicht;
- Fig. 3: den Polster für die Rückenlehne nach Fig. 2 in Draufsicht, geschnitten gemäß den Linien III-III in Fig.2;
- Fig. 4: einen Polster für eine Sitzfläche des Sitzes nach Fig.1 in Seitenansicht;
- Fig. 5: den Polster für die Sitzfläche nach Fig.4 in Stirnansicht und im Schnitt gemäß den Linien V-V;
- Fig. 6: einen Polster für eine Sitzfläche eines Sitzes in einer Ansicht von unten, wobei die Flammenschutzschicht teilweise entfernt ist;
- Fig. 7: den Polster nach Fig.6 in Seitenansicht geschnitten gemäß den Linien VII-VII in Fig.6;
- Fig. 8: einen Polster für eine Sitzfläche des Sitzes nach Fig.1 in Seitenansicht geschnitten;
- Fig. 9: die Verbindungsstelle zwischen der Zwischenschicht und der Verbindungsvorrichtung in größerem Maßstab;
- Fig. 10: den Polster für die Sitzfläche in Stirnansicht und im Schnitt gemäß den Linien X-X in Fig.9;
- Fig. 11: eine Doppelsitzbank mit zwei erfindungsgemäßen Sitzen für zwei Personen in schaubildlicher Darstellung;
- Fig. 12: einen Sitzpolster für einen Sitz nach Fig.11 in schaubildlicher Darstellung teilweise geschnitten;
- Fig. 13: einen Teil der Doppelsitzbank nach Fig.11 in Seitenansicht geschnitten;
- Fig. 14: einen Sitzpolster nach Fig.11 oder 12 in vereinfachter schematischer Darstellung und in Seitenansicht geschnitten;
- Fig. 15: eine andere Ausführungsvariante eines Sitzpolsters in Seitenansicht geschnitten und in vereinfachter schematischer Darstellung mit unterschiedlich ausgebildeten Ausnehmungen;
- Fig. 16: eine Doppelsitzbank mit zwei erfindungsgemäßen Sitzen für zwei Personen in schaubildlicher Darstellung;
- Fig. 17: den Rückenpolster der Doppelsitzbank nach Fig.16 in Seitenansicht teilweise geschnitten;
- Fig. 18: den Rückenpolster in Draufsicht geschnitten gemäß den Linien XVIII- XVIII in Fig.17;
- Fig. 19: den Sitzpolster der Doppelsitzbank nach Fig.16 in Seitenansicht teilweise geschnitten;
- Fig. 20: den Sitzpolster in Stirnansicht geschnitten gemäß den Linien XX-XX in Fig.19;
- Fig. 21: den Sitzpolster in Stirnansicht geschnitten gemäß den Linien XI-XI in Fig.19;
- Fig. 22: den Sitzpolster nach Fig.19 in einer Ansicht von unten teilweise geschnitten;
- Fig. 23: eine Ausführungsvariante eines Sitzpolsters in Stirnansicht geschnitten;
- Fig. 24: den Sitzpolster nach Fig.12 in Draufsicht;
- Fig. 25: eine andere Ausführungsform eines Sitzpolsters in Stirnansicht geschnitten.

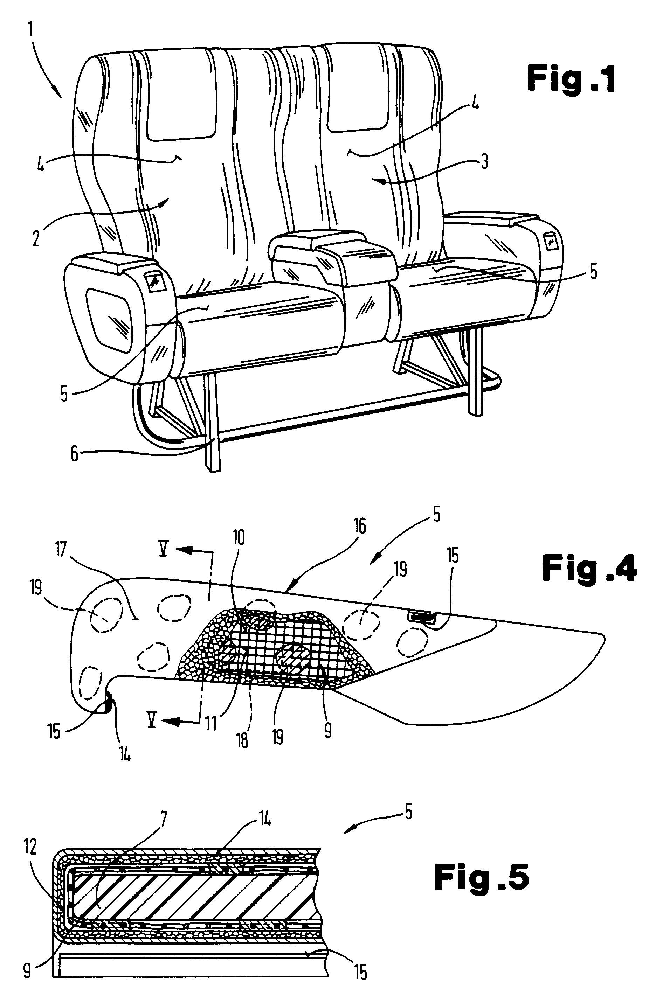

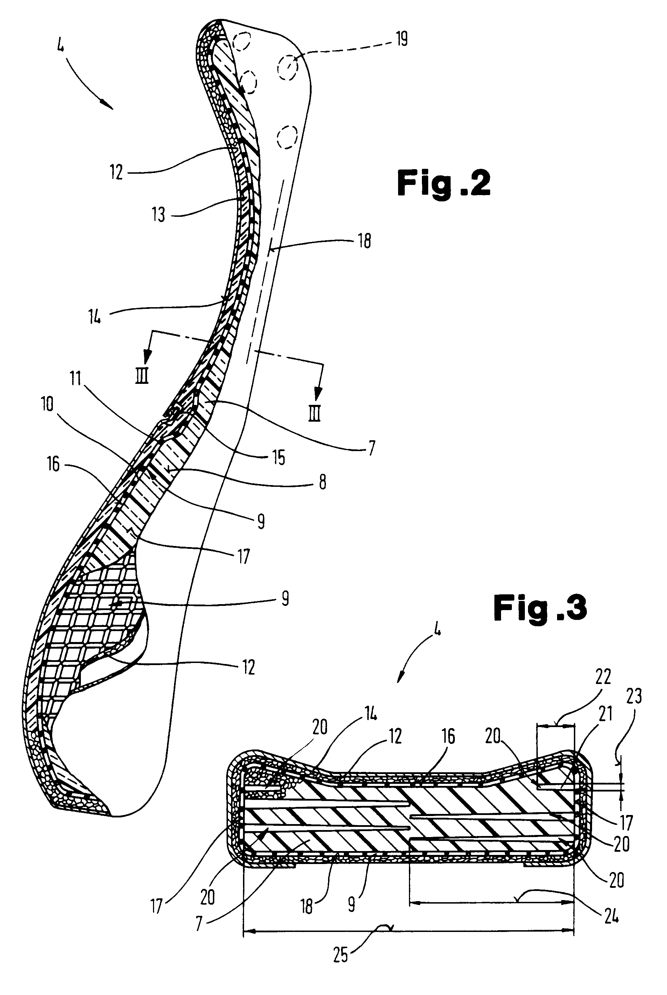

In Fig.1 ist eine Doppelsitzbank 1 mit zwei Sitzen 2,3 dargestellt. Jeder Sitz 2,3 besteht aus einem Polster 4 für eine Rückenlehne und einem Polster 5 für eine Sitzfläche. Die Polster 4 und 5 der beiden Sitze 2 und 3 sind identisch aufgebaut jedoch spiegelbildlich ausgebildet. Sie können aber auch für einen Einzelsitz oder eine Mehrfachsitzbank verwendet werden. Außerdem kann ein Sitz 2 oder 3 auch aus einem einzigen oder mehreren Polstern bestehen.

Die Polster 4 und 5 werden in ein generell mit 6 bezeichnetes Traggestell eingelegt. Das Traggestell 6 kann auch jede beliebige andere Form aufweisen.

In Fig.2 ist ein Polster 4 für die Rückenlehne in größerem Maßstab und teilweise geschnitten dargestellt. Der Polster 4 umfaßt einen Stützkörper 7 der bevorzugt aus einem Formkaltschaum besteht und in einer den gewünschten äußeren Abmessungen des Stützkörpers 7 entsprechenden Form hergestellt wird. Er besteht aus einem elastischen offenzelligen Kunststoffschaum. Bevorzugt ist er einteilig ausgebildet. Der Kunststoffschaum kann wie schematisch durch kleine Striche im Bereich der Schraffur angedeutet mit einem pulverförmigen Flammschutzmittel 8, z.B. durch Melaminharz und bzw. oder Aluminiumhydroxyd versetzt sein. Auf der Oberseite des Stützkörpers 7 ist eine Zwischenschicht 9 aus gitter- bzw. netzförmig verlegten, hochtemperaturfesten Fäden 10 und 11 angeordnet. Diese Zwischenschicht 9 wird von einer Flammschutzschicht 12, die auf der vom Stützkörper 7 abgewendeten Seite der Zwischenschicht 9 vorgesehen ist, abgedeckt. Diese Flammschutzschicht 12 ist, wie wieder durch Striche in der Schraffur angedeutet mit einem flüssigen Flammschutzmittel 13 getränkt. Das flüssige Flammschutzmittel ist z.B. chlor-, bromoder phosphorhaltig. Vorteilhaft ist es, wenn das flüssige Flammschutzmittel mit Aluminiumoxydhydrat vermischt ist, dessen Korngrößenverteilung vorzugsweise zwischen 0,2 und 110 m beträgt. Diese Flammschutzschicht 12 besteht bevorzugt aus einem Polyäther, wobei der Schaumkunststoff einen Teil eines Kunststoffschaumblockes bildet, der nachträglich mit einem flüssigen Flammschutzmittel getränkt wird. Die Flammschutzschicht 12, die Zwischenschicht 9, und der Stützkörper 7 sind in über die Fläche verteilten Bereichen über einen Kleber 19 miteinander verbunden. Die Flammschutzschicht 12 wird auf jeder vom Stützkörper 7 abgewendeten Seite mit einem schwer entflammbaren Bezugstoff 14 abgedeckt. Die Verbindung des Bezugstoffes 14 mit dem Polster 4 erfolgt über Klettbänder 15, die im Bereich einer Vertiefung der Flammschutzschicht 12 angeordnet sein können. Die Zwischenschicht 9 und die Flammschutzschicht 12 umhüllen den Stützkörper 7 sowohl im Bereich einer Oberfläche 16, die der den Sitz benutzenden Person zugewandt ist, als auch im Bereich von Seitenflächen 17 und einer Rückfläche 18. Der schwer entflammbare Bezugstoff 14 kann ebenfalls den gesamten Polster 4 überdecken, aber es ist, bedingt durch den erfindungsgemäßen Aufbau des Polsters 4 nunmehr auch möglich, in jenen Bereichen, die nicht einzusehen sind - wie beispielsweise unterhalb der Sitzbank den schwer entflammbaren Bezugstoff wegzulassen.

In Fig.3 ist ein Schnitt durch den Polster 4 gezeigt, wobei neben dem bekannten Aufbau bestehend aus einem schwer entflammbaren Bezugstoff 14 einer darunter angeordneten Flammschutzschicht 12, einer Zwischenschicht 9, und dem Stützkörper 7, Ausnehmungen 20 angeordnet sind. Diese Ausnehmungen 20 erstrecken sich im vorliegenden Ausführungsbeispiel von den beiden Seitenflächen 17 in Richtung der Polstermitte. Die Ausnehmungen 20 sind im vorliegenden Ausführungsbeispiel durch zylindrische Kegelstümpfe gebildet. Es ist hierbei jedoch die Form der Ausnehmungen 20 frei wählbar. So können anstelle des zylinderförmigen Kegelstumpfes auch mehreckige Pyramidenstümpfe oder Ausnehmungen mit einem pyramidenstumpfförmigen Querschnitt vorgesehen werden. Wesentlich ist hierbei, daß, wie aus der Zeichnung ersichtlich, Öffnungen 21 durch die Flammschutzschicht 12 und die Zwischenschicht 9 abgedeckt sind. Eine Länge 22 und ein Durchmesser 23 im Bereich der Öffnung 21 können wie aus der Zeichnung ebenfalls ersichtlich unterschiedlich sein. Durch die unterschiedliche Länge kann in den verschiedenen über den Polster 4 verteilten Bereichen eine Entlüftung erfolgen. Außerdem können in stärker belasteten Bereichen wie beim Polster 4 der Mittelbereich weniger Ausnehmungen 20 bzw. Ausnehmungen 20 mit einem geringeren Durchmesser 23 bzw. Volumen angeordnet werden. Die Länge 22 der Ausnehmungen 20 wird beispielsweise in dem der Oberfläche 16 zugewandten Bereich geringer sein als eine Länge 24 im Bereich der Rückfläche 18. Dazu kommt, daß sich die Ausnehmungen 20 jeweils nur über einen Teil einer Stützkörperbreite 25 erstrecken. Dabei ist es jedoch auch möglich, anstelle der in der Fig.4 gezeigten Ausnehmungen 20 Ausnehmungen zu verwenden die sich über eine gesamte Stützkörperbreite 25 von einer Seitenfläche 17 zur anderen Seitenfläche 17 erstrecken.

In Fig. 4 ist ein Polster 5 gezeigt, der eine Sitzfläche bildet. Bei diesem Polster 5 ist wieder der dem Benutzer zugewandten Oberfläche 16 aber auch der Rückfläche 18 und den Seitenflächen 17 die Zwischenschicht 9 zugeordnet, die aus einem Netz gebildet ist, welches aus hochtemperaturfesten Materialien wie beispielsweise Fäden 10 und 11 aus Glas, Keramik oder Metall bzw. Kohle bestehen. Desweiteren sind in dem aufgerissen dargestellten Bereich in welchem die einzelnen Schichten des Polsters 5 besser zu ersehen sind, jene über die Seitenfläche 17 distanzierten Bereiche zu ersehen, in welchen mittels Kleber 19 die Zwischenschicht 9 auf dem Stützkörper 7 und die Flammschutzschicht 12 auf der Zwischenschicht 9 festgeklebt ist. Diese Bereiche sind wie schematisch angedeutet mit Abstand voneinander über die Seitenflächen 17 verteilt angeordnet, sodaß der Luftdurchsatz des Polsters 5 durch den Kleber 19 nicht wesentlich nachteilig beeinflußt wird. Zur Befestigung des Bezugstoffes 14 ist auch in diesem Fall auf der Rückfläche des Polsters 5 ein Klettband 15 angeordnet.

In Fig.5 ist ein Schnitt durch den Polster 5 gezeigt, aus welchen wieder der bereits vorstehend beschriebene Schichtaufbau zu entnehmen ist. Auch in diesem Fall ist dem Stützkörper 7 eine Zwischenschicht 9, die beispielsweise auch durch ein Gewirke oder Gewebe gebildet sein kann, bei dem bevorzugt die Maschenweite wie bei den gitter- bzw. netzförmig verlegten Fäden ca. 0,5 bis 8 mm, bevorzugt 3 mm beträgt, eine Flammschutzschicht 12 und der schwer entflammbare Bezugstoff 14 vorgeordnet.

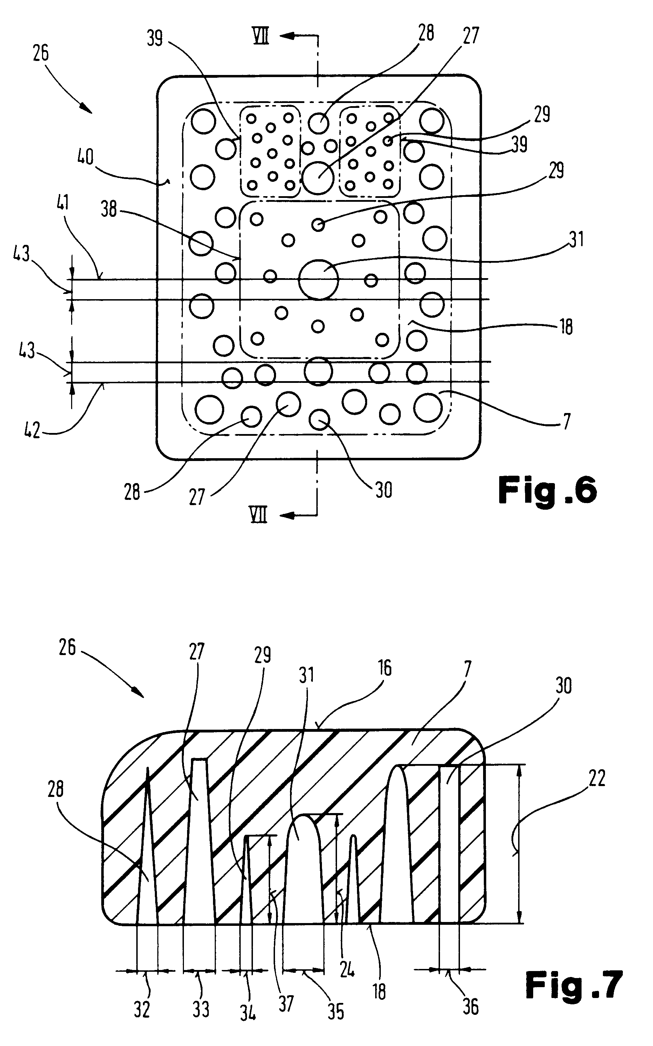

In den Fig.6 und 7 ist ein Polster 26 gezeigt, dessen Aufbau im Bereich der Oberfläche dem der Polster 4 und 5 entspricht. Desweiteren sind in diesem Polster 26 eine Vielzahl von Ausnehmungen 27 bis 31 vorgesehen. Diese Ausnehmungen unterscheiden sich wie aus einer Zusammenschau der Fig.6 und 7 zu entnehmen ist lediglich durch ihre Querschnittsform bzw. einem im Bereich der Rückfläche 18 vorgesehenen Durchmessern 32,33,34,35 und 36. Während beispielsweise der Durchmesser 32 der Ausnehmung 28 geringer ist als jener der Ausnehmungen 27 und 31 ist diese als Kegelspitz ausgebildet, während die Ausnehmung 27 als Kegelstumpf ausgebildet ist. Die Ausnehmung 29 ist wiederum als Kegelspitz ausgebildet ebenso wie die Ausnehmung 31, wobei diese jedoch eine parabolische Querschnittsform aufweisen. Die Ausnehmung 30 dagegen ist beispielsweise als Zylinder ausgebildet, dessen Durchmesser 36 über die gesamte Länge der Ausnehmung gleich groß ist. Selbstverständlich ist es aber auch möglich einen drei- sechs- oder mehreckigen Quader zu verwenden. Desgleichen können anstelle der zylindrischen Kegelstümpfe bzw. Kegelspitzen mehreckige Pyramiden bzw. Pyramidenspitzen treten.

Desweiteren weisen die Ausnehmungen 27 bis 31 unterschiedliche Längen 22 bzw. 24 oder 37 auf. Durch die unterschiedlichen Schichtdicken zwischen den Enden der Ausnehmungen 27 bis 31 und der Oberfläche 16 wird eine unterschiedliche Stabilität des Polsters 26 in über die Oberfläche 16 verteilten Bereichen erzielt. So wird in einem mit einer strich-punktierten Linie eingefaßten Bereich 38 welcher etwa in jener Lage auf dem Polster 26 angeordnet wird, auf welchen in den meisten Fällen das Gesäß aufliegt, zwar eine ausreichende Durchlüftung durch eine Mehrzahl von Ausnehmungen 29 und 31 vorgesehen, die jedoch eine geringe Länge 24 bzw. 37 und ein geringes Volumen aufweisen, wodurch eine stärkere bzw. steifere und widerstandsfähigere Tragschicht gebildet wird. Durch strichzweipunktierte Linien eingegrenzte Bereiche 39 sind beispielsweise den Oberschenkeln zugeordnet. Auch dort wird eine höhere Widerstandsfestigkeit gegen das Durchsitzen erreicht als beispielsweise in den unmittelbar benachbarten Bereichen mit den Ausnehmungen 27 mit den größeren Durchmessern. Zwar wird durch eine Vielzahl der Ausnehmungen 29 eine gute Durchlüftung erreicht durch deren kleinen Durchmesser 34 weisen diese Bereiche 39 des Polsters 26 aber trotzdem einen höheren Widerstand und eine geringere Elastizität auf. In den diesen Bereichen 38 und 39 benachbarten Bereichen ist eine Vielzahl von Ausnehmungen teilweise mit größerem Durchmesser vorgesehen, sodaß diese weniger belasteten Bereiche eine höhere Elastizität und eine geringere Widerstandskraft aufweisen, andererseits aber Gewicht gespart werden kann und somit bei dem für den Stützkörper 7 verwendeten Kunststoffschaum mit einem höheren Raumgewicht, z.B. auch mit einer höheren Füllung an pulverförmigen Flammschutzmitteln, gearbeitet werden kann.

Wie weiters zu ersehen ist, weist der Polster 26 in seinem an die Oberfläche 16 bzw. die Seitenflächen 17 anschließenden Bereichen eine durchgehende Schicht 40 - durch eine zwei-strich-zwei-punktierte Linie begrenzt - auf, in der keinerlei Ausnehmungen angeordnet sind. Die Dicke dieser Schicht kann in Abhängigkeit von den von der Prüfbehörde vorgeschriebenen Standzeiten bei Flammeinwirkung gewählt werden. Üblicherweise weist die Schicht eine Dicke von ca. 5 bis 100 mm auf.

Zum besseren Verständnis der durch die Erfindung erzielten unterschiedlichen Raumgewichte in beispielsweise senkrecht zur Oberfläche 16 verlaufenden Querschnittscheiben 41, 42 wurden diese Querschnittscheiben 41, 42 mit dünnen Linien in Fig.6 eingetragen. Die Querschnittscheiben weisen eine gleiche Dicke 43 auf. Wie nun aus der zeichnerischen Darstellung klar zu ersehen ist, sind im Bereich der Querschnittscheibe 42 wesentlich mehr Ausnehmungen mit einem größeren Volumen vorgesehen als im Bereich der Querschnittscheibe 41, woraus sich für diese Querschnittscheiben 41 bei gleichen äußeren Abmessungen hinsichtlich der Länge und der Breite unterschiedliche Gewichte bzw. ein unterschiedliches Verhältnis zwischen Ausnehmungen und Kunststoffschaum ergibt. Durch die Wahl und Anordnung der Ausnehmungen bzw. deren Volumen kann somit auch bei einem Kunststoffschaum mit höherem Raumgewicht der naturgemäß nicht mehr so elastisch ist wie ein Kunststoffschaum mit niederen Raumgewicht, das Elastizitätsverhalten eines Kunststoffschaumes mit hohem Raumgewicht nahezu an jenes mit niederen Raumgewicht angepaßt werden. Dies ermöglicht nunmehr mit einem aus einem Stück bestehenden Stützkörper 7 für einen erfindungsgemäßen Polster 4,5,26 das Auslangen zu finden, wodurch die aufwendigen Klebevorgänge für die Verbindung von verschiedenen Schichten zu einem einstückigem Polster 4,5,26 eingespart werden können.

Generell ist festzuhalten, daß für den schwer entflammbaren Bezugstoff Verbindungen zwischen Baumwolle und Polyester z.B. 81 % Baumwolle und 19 % Polyester aber auch Bezugstoffe aus 59 % Wolle, 33 % Baumwolle und 8 % Polyester Verwendung finden können.

Der Kunststoffschaum aus dem der Stützkörper 7 besteht, kann durch einen Formkaltschaum gebildet sein, der bevorzugt ein Raumgewicht zwischen 15 und 60 kg/m³ bevorzugt 40 kg/m³ aufweist. Dieser Stützkörper ist desweiteren mit einem pulverförmigen Flammschutzmittel versetzt, welches aus Melaminharz und bzw. oder Aluminiumhydroxyd oder einer Mischung der beiden bestehen kann.

Die Zwischenschicht 9 wird bevorzugt aus Glas- bzw. Kohlefasermatten gebildet, die ein Gewicht von 150 bis 350 g/m² aufweisen können. Dadurch wird ein günstiges Verhalten zwischen dem Gewichtszuwachs bei der Verwendung dieser Zwischenschicht 9 und deren Flammschutzwirkung erreicht. Es können aber auch Zwischenschichten 9 mit einem anderen Gewicht verwendet werden.

Selbstverständlich können die hochtemperaturfesten Fäden bzw. Fasern in beliebiger Art untereinander verbunden sein. So können Gewebe und Gewirke aus diesen Fasern oder Fäden oder aus derartigen Fasern bestehenden Fäden verwendet werden und es können andererseits die unterschiedlichsten Materialien einzeln oder vermischt miteinander zur Anwendung kommen, um den von außen einwirkenden Flammen einen möglichst hohen Widerstand über längere Zeit entgegenzusetzen. Bevorzugt werden als Grundmaterialien für die Fäden und Fasern jedoch Glas, Keramik, Graphit oder hochtemperaturfeste Metalle verwendet.

Je nach der erzielten Maschenweite bei den Gewirken, Geweben, Netzen oder Gittern der hochtemperaturfesten Fasern bzw. Fäden entsteht eine sogenannte Siebwirkung, die verhindert, daß die Flamme über dieses Sieb durch die kleinen Öffnungen nicht hinaustreten kann und dadurch wird der direkte Abbrand im Bereich des hinter der Zwischenschicht 9 angeordneten Stützkörpers 7 verringert. Andererseits kann eine Flammentwicklung im Inneren des Stützkörpers nicht von innen her auf andere Bereiche des Bezugstoffes nach außen übergreifen, wodurch der Luftzutritt in diesen Bereichen für die Flamme im Stützkörper nicht vergrößert werden kann und damit die Ausbreitung eines Feuers im Sitz zusätzlich vermindert wird.

Die Flammschutzschicht 12 besteht bevorzugt aus einem Schaumkunststoff mit einem Raumgewicht von ca. 20 bis 60 kg/m³. Meist wird ein Polyätherschaum verwendet. Aus diesem Polyätherschaum werden Blöcke hergestellt und nach der Aufschäumung werden diese in Platten oder Bahnen mit der gewünschten Schichtstärke geschnitten. Diese Platten werden dann mit einem flüssigen Flammschutzmittel getränkt, wobei als Flammschutzmittel ein Polyuräthan der Type 64 (Firma Bayer) verwendet werden kann, von welchen Gewichtsteile mit 80 Gewichsteilen Al (OH)3 vermischt werden. Dieses Aluminiumoxydhydrat wird in das Polyuräthan eingerührt.

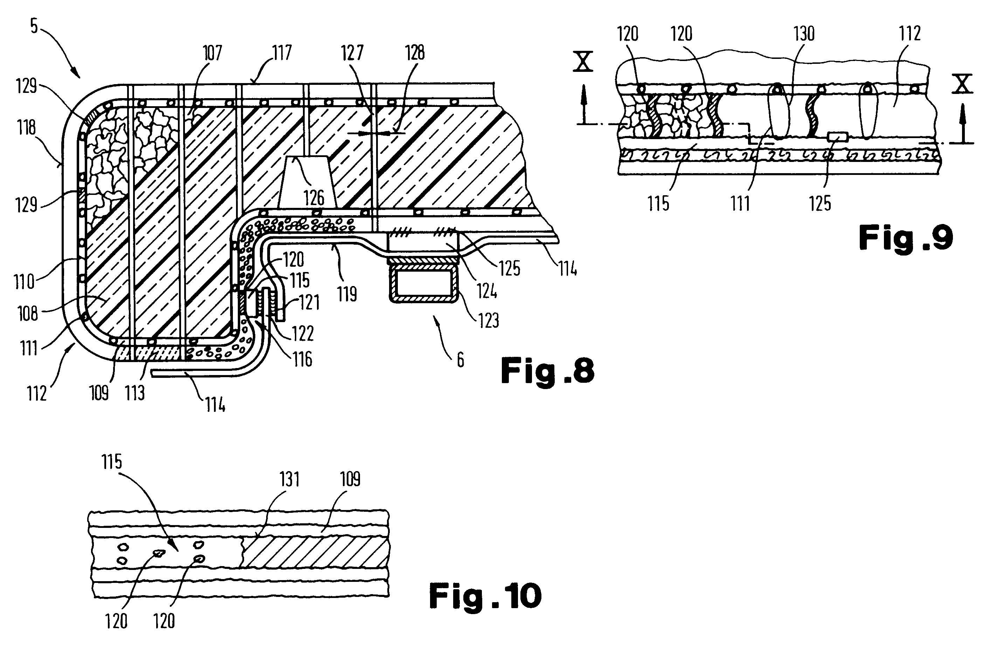

In Fig.8 ist von einer Doppelsitzbank die im wesentlichen der in Fig.1 gezeigten Doppelsitzbank 1 entsprechen kann - weswegen für einige Teile auch gleiche Bezugszeichen verwendet werden - mit zwei Sitzen mit einem Polster für eine Rückenlehne und einem Polster 5 für eine Sitzfläche der Polster 5 für die Sitzfläche in größerem Maßstab und geschnitten dargestellt. Der Polster 5 umfaßt einen Stützkörper 107 der bevorzugt aus einem Formkaltschaum besteht und in einer den gewünschten äußeren Abmessungen des Stützkörpers 107 entsprechenden Form hergestellt wird. Er besteht aus einem elastischen offenzelligen Kunststoffschaum. Bevorzugt ist er einteilig ausgebildet. Der Kunststoffschaum kann wie schematisch durch kleine Striche im Bereich der Schraffur angedeutet mit einem pulverförmigen Flammschutzmittel 8 z.B. durch Melaminharz und bzw. oder Aluminiumhydroxyd versetzt sein. Auf der Oberseite des Stützkörpers 107 ist eine Zwischenschicht 109 aus gitter- bzw. netzförmig verlegten hochtemperaturfesten Fäden 110 und 111 angeordnet. Diese Zwischenschicht 109 wird von einer Flammschutzschicht 112, die auf der vom Stützkörper 107 abgewendeten Seite der Zwischenschicht 109 vorgesehen ist, abgedeckt. Diese Flammschutzschicht 112 ist wie wieder durch Striche in der Schraffur angedeutet mit einem flüssigen Flammschutzmittel 113 getränkt. Das flüssige Flammschutzmittel 113 ist z.B. chlor-, brom- oder phosphorhaltig. Vorteilhaft ist es, wenn das flüssige Flammschutzmittel mit Aluminiumoxydhydrat vermischt ist, dessen Korngrößenverteilung vorzugsweise zwischen 0,2 und 110 m beträgt. Diese Flammschutzschicht 112 besteht bevorzugt aus einem Polyäther, wobei der Schaumkunststoff einen Teil eines Kunststoffschaumblockes bildet, der nachträglich mit einem flüssigen Flammschutzmittel 113 getränkt wird. Die Flammschutzschicht 112 auf jeder vom Stützkörper 107 abgewendeten Seite mit einem schwer entflammbaren Bezugstoff 114 abgedeckt. Die Verbindung des Bezugstoffes 114 mit dem Polster 5 erfolgt über eine Verbindungsvorrichtung 115, z.B. Klettbänder, die im Bereich einer Vertiefung 116 der Flammschutzschicht 112 angeordnet sein können. Die Zwischenschicht 109 und die Flammschutzschicht 112 umhüllen den Stützkörper 107 sowohl im Bereich einer Oberfläche 117, die der den Sitz benutzenden Person zugewandt ist, als auch im Bereich von Seitenflächen 118 und einer Rückfläche 119. Der schwer entflammbare Bezugstoff 114 kann ebenfalls den gesamten Polster 5 überdecken, aber es ist, bedingt durch den erfindungsgemäßen Aufbau des Polsters 5 nunmehr auch möglich in jenen Bereichen, die nicht einzusehen sind - wie beispielsweise unterhalb der Sitzbank den schwer entflammbaren Bezugstoff 114 wegzulassen.

Wie weiters in Fig.8 zu ersehen ist, ist die Verbindungsvorrichtung 115 mit der Zwischenschicht 109 bewegungsverbunden. Diese erfolgt, wie beispielsweise in Fig.8 schematisch angedeutet, über eine die Flammschutzschicht 112 durchsetzende Kleberschicht 120. Diese Kleberschicht 120 stellt eine Bewegungsverbindung zwischen der Verbindungsvorrichtung 115 und der Zwischenschicht 109 dar.

Wie aus dieser Darstellung besser ersichtlich, ist die Verbindungsvorrichtung 115, die im vorliegenden Fall als Klettband ausgebildet sein kann, mit dem Bezugstoff 114 verbunden, wobei ein weiteres Ende 121 des Bezugstoffes 114 über ein weiteres Klettband mit dem anderen Ende 122 des Bezugstoffes verbunden sein kann. Selbstverständlich können anstelle der gezeigten Klettbänder auch mit Reißverschlußteilen verbundene Tragbänder oder dgl. verwendet werden.

Wie aus dieser Darstellung weiters ersichtlich, kann beispielsweise in Bereichen von Tragholmen 123 des Traggestelles 6 eine weitere Schicht 124 eines flammfesten Bezugstoffes 114 angeordnet sein. Diese weitere Schicht 124 des flammfesten Bezugstoffes 114 kann über einen Kleber 125 mit der Flammschutzschicht 112 verbunden sein. Dadurch wird der zwischen dem Tragholm 123 und der Flammschutzschicht 112 angeordnete Bezugstoff geschont, da die sehr nachgiebige Flammschutzschicht 112 durch die weitere Schicht 124 des Bezugstoffes verstärkt und versteift wird, sodaß starke Knickungen im Bereich des Tragholms 123 vermieden werden können. Dies bewirkt, daß in den Eckbereichen des Tragholms der Bezugstoff 114 nicht mehr so stark abgenutzt wird wie ohne Verwendung einer weiteren Schicht 124 des Bezugstoffes. Die Verwendung eines Netzes oder Gewirkes aus hochwiderstandsfähigen Fasern, wie beispielsweise Glasfasern oder dgl., würde nicht den gleichen Erfolg bringen wie die Verwendung eines Bezugstoffes 114, da diese Materialien in sich sehr steif und brüchig sind, sodaß die Gefahr besteht, daß der Bezugstoff 114 zwischen dem Tragholm 123 und einer derartigen aus Netzen oder Gewirken von Glasfasern oder dgl. bestehenden Verstärkungseinlagen noch stärker beansprucht werden würde als vorher.

Zur Erzielung einer ausreichenden Luftdurchlässigkeit im Bereich des Polsters 5 können in diesen Ausnehmungen 126 vorgesehen sein. Weiters ist es auch möglich, rohrförmige Öffnungen 127 mit einem Durchmesser 128, der von 0,1 bis 20, bevorzugt 1 mm betragen kann, angeordnet sein. Diese Öffnungen 127 können die gesamte Dicke des Polsters 5 oder den Bereich zwischen der Oberfläche 117 und der Ausnehmung 126 durchzusetzen. Dadurch wird eine ausreichende Atmungsaktivität des Polsters 5 sichergestellt.

Die Flammschutzschicht 112, die Zwischenschicht 109, und der Stützkörper 107 sind in über die Fläche verteilten Bereichen über einen Kleber 129 miteinander verbunden.

In Fig.9 ist besser ersichtlich, daß die Kleberschicht 120 zwischen der Verbindungsvorrichtung 115 und der Zwischenschicht 109 örtlich und räumlich voneinander distanziert angeordnet sind, sodaß die Gesamtelastizität der Flammschutzschicht nicht wesentlich darunter leidet. Weiters ist gezeigt, daß anstelle der Kleberschicht 120 die Verbindung zwischen der Verbindungsvorrichtung 115 und der Zwischenschicht 109 durch Fäden 130, die beispielsweise die Fäden 111 der Zwischenschicht 109 umfassen und die Verbindungsvorrichtung 115 durchsetzen, erfolgen kann. Selbstverständlich ist es möglich, zusätzlich zwischen diesen Fäden 130, wie ebenfalls schematisch angedeutet, mit dem Kleber 125 die Zwischenschicht 109 und die Verbindungsvorrichtung 115 untereinander zu verbinden. Weiters ist es auch möglich, in zu diesen versetzten Bereichen die Verbindungsvorrichtung 115 mit der Flammschutzschicht 112 über einen Kleber 125 zu verbinden. Die Art der Verbindung zwischen der Verbindungsvorrichtung 115, der Flammschutzschicht 112 und der Zwischenschicht 109 kann je nach Beanspruchung aufgeteilt sein und entweder nur durch die Kleberschicht 120 oder nur durch Fäden 130 oder den Kleber 125 oder in wahlweiser Kombination erfolgen.

In Fig.10 ist weiters ersichtlich, daß die bandförmige Verbindungsvorrichtung 115, die als Klettband 131 gebildet ist, ist, wie ersichtlich, in mehreren voneinander distanzierten Bereichen mit der Zwischenschicht 109 verbunden. Zum dosierten Einbringen des Klebers zur Herstellung dieser Kleberschichten 120 kann der Kleber in die Flammschutzschicht 112 injiziert werden, wobei die Verbindung zwischen der Verbindungsvorrichtung 115 und der Zwischenschicht 109 durch Ausüben einer Preßkraft erfolgen kann. Dabei ist es möglich, die Verbindungsvorrichtung 115 bzw. das Klettband 131 so tief in die Flammschutzschicht 112, wie in Fig.8 gezeigt, einzudrücken, daß der Bezugstoff 114 nahezu ebenflächig über die Verbindungsvorrichtung 115 und die unmittelbar benachbarten Bereiche der Flammschutzschicht 112 hinweggeführt werden kann.

Selbstverständlich können die Ausnehmungen 126, von welchen eine in Fig.8 schematisch gezeigt ist, verschiedene Ausbildungen aufweisen, so z.B. die eines zylindrischen Kegelstumpfes. Es können anstelle des zylinderförmigen Kegelstumpfes aber auch mehreckige Pyramidenstümpfe oder Ausnehmungen mit einem pyramidenstumpfförmigen Querschnitt vorgesehen werden. Wesentlich ist hierbei, daß, wie aus der Zeichnung ersichtlich, Öffnungen durch die Flammenschutzschicht 112 und die Zwischenschicht 109 abgedeckt sind. Eine Länge und ein Durchmesser im Bereich der Öffnung können unterschiedlich sein. Durch die unterschiedliche Länge kann in den verschiedenen über den Polster 5 verteilten Bereichen eine unterschiedlich starke Entlüftung erfolgen. Außerdem können in stärker belasteten Bereichen wie beim Polster 5 im Mittelbereich weniger Ausnehmungen bzw. Ausnehmungen mit einem geringeren Durchmesser bzw. Volumen angeordnet werden.

Die Zwischenschicht 109 kann durch ein Gewirke, ein Netz, ein Gitter oder dgl. gebildet sein, welche aus hochtemperatufesten Materialien wie beispielsweise Fäden 110 und 111 aus Glas, Keramik oder Metall bzw. Kohle besteht. Desweiteren sind in dem aufgerissen dargestellten Bereich in welchem die einzelnen Schichten des Polsters 5 besser zu ersehen sind, jene über die Seitenflächen distanzierten Bereiche zu ersehen in welchen mit dem Kleber 125 die Zwischenschicht 109 auf dem Stützkörper 107 und die Flammschutzschicht 112 auf der Zwischenschicht 109 festgeklebt ist. Diese Bereiche sind wie schematisch angedeutet mit Abstand voneinander über die Seitenflächen verteilt angeordnet, sodaß der Luftdurchsatz des Polsters 5 durch den Kleber 125 nicht wesentlich nachteilig beeinflußt wird.

Die Zwischenschicht 109 kann beispielsweise auch durch ein Gewirke oder Gewebe gebildet sein, bei dem bevorzugt die Maschenweite wie bei den gitter- bzw. netzförmig verlegten Fäden ca. 0,5 bis 8 mm bevorzugt 3 mm beträgt.

Generell ist weiters festzuhalten, daß für den schwer entflammbaren Bezugstoff Verbindungen zwischen Baumwolle und Polyester z.B. 81 % Baumwolle und 19 % Polyester aber auch Bezugstoff aus 59 % Wolle, 33 % Baumwolle und 8 % Polyester Verwendung finden können.

Der Kunststoffschaum aus dem der Stützkörper 107 besteht, kann durch einen Formkaltschaum gebildet sein, der bevorzugt ein Raumgewicht zwischen 15 und 60 kg/m³, bevorzugt 40 kg/m³ aufweist. Dieser Stützkörper ist desweiteren mit einem pulverförmigen Flammschutzmittel versetzt, welches aus Melaminharz und bzw. oder Aluminiumhydroxyd oder einer Mischung der beiden bestehen kann.

Die Zwischenschicht 109 wird bevorzugt aus Glas- bzw. Kohlefasermatten gebildet, die ein Gewicht von 150 bis 350 g/m² aufweisen können. Dadurch wird ein günstiges Verhalten zwischen dem Gewichtzuwachs bei der Verwendung dieser Zwischenschicht 109 und deren Flammschutzwirkung erreicht. Es können aber auch Zwischenschichten 109 mit einem anderen Gewicht verwendet werden.

Selbstverständlich können die hochtemperaturfesten Fäden bzw. Fasern in beliebiger Art untereinander verbunden sein. So können Gewebe und Gewirke aus diesen Fasern oder Fäden oder aus derartigen Fasern bestehenden Fäden verwendet werden und es können andererseits die unterschiedlichsten Materialien einzeln oder vermischt miteinander zur Anwendung kommen, um den von außen einwirkenden Flammen einen möglichst hohen Widerstand über längere Zeit entgegenzusetzen. Bevorzugt werden als Grundmaterialien für die Fäden und Fasern jedoch Glas, Keramik, Graphit oder hochtemperaturfeste Metalle verwendet.

Je nach der erzielten Maschenweite bei den Gewirken, Geweben, Netzen oder Gittern der hochtemperaturfesten Fasern bzw. Fäden entsteht eine sogenannte Siebwirkung, die verhindert, daß die Flamme über dieses Sieb durch die kleinen Öffnungen nicht hinaustreten kann und dadurch wird der direkte Abbrand im Bereich des hinter der Zwischenschicht 109 angeordneten Stützkörpers 107 verringert. Andererseits kann eine Flammentwicklung in Inneren des Stützkörpers nicht von innen her auf andere Bereiche des Bezugstoffes nach außen übergreifen, wodurch der Luftzutritt in diesen Bereichen für die Flamme im Stützkörper nicht vergrößert werden kann und damit die Ausbreitung eines Feuers im Sitz zusätzlich vermindert wird.

Die Flammschutzschicht 112 besteht bevorzugt aus einem Schaumkunststoff mit einem Raumgewicht von ca. 20 bis 60 kg/m³. Meist wird ein Polyätherschaum verwendet. Aus diesem Polyätherschaum werden Blöcke hergestellt und nach der Aufschäumung werden diese in Platten oder Bahnen mit der gewünschten Schichtstärke geschnitten. Diese Platten werden dann mit einem flüssigen Flammschutzmittel getränkt, wobei als Flammschutzmittel ein Polyuräthan der Type 64 (Firma Bayer) verwendet werden kann, von welchem Gewichtsteile mit 80 Gewichtsteilen A1 (OH)³ vermischt werden. Dieses Aluminiumoxydhydrat wird in das Polyuräthan eingerührt.

Selbstverständlich sind die Verbindungsvorrichtungen, wie sie in Verbindung mit dem Polster 5 vorstehend beschrieben sind, auch in Verbindung mit den Polstern 4 gemäß Fig.1 verwendbar.

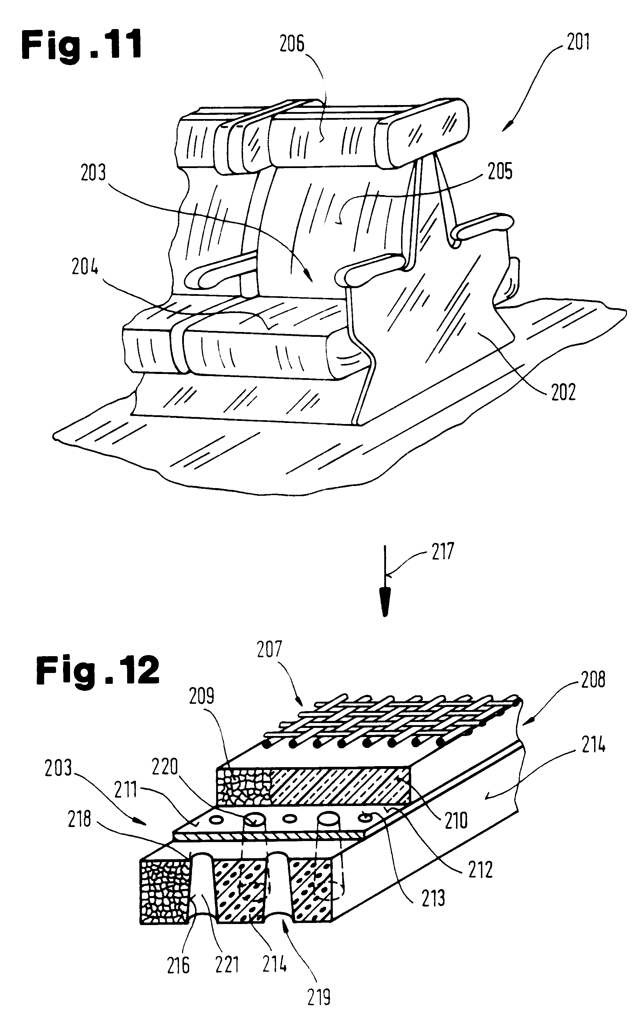

In Fig. 11 ist ein Sitz 201 für ein Fahrzeug beispielsweise einem öffentlichen Verkehrsmittel, wie einer Straßenbahn, einem Eisenbahnwaggon oder einem Autobus dargestellt. Der Sitz 201 kann aber in anderer Form ebenso für Personenkraftwagen oder Lastwagen verwendet werden. Dieser Sitz 201 besteht aus einem Traggestell 202 und einer aus mehreren Schichten hergestellten Polsterung 203, die, wie beim dargestellten Ausführungsbeispiel einen Sitzpolster 204, einen Rückenpolster 205 und einen Kopfpolster 206 umfassen kann. Jeder dieser Sitzpolster, Rückenpolster und Kopfpolster 204,205 bzw. 206 kann aus mehreren Schichten bestehen.

In Fig. 12 sind die Schichten, aus welchen die Sitz-, Rücken- und Kopfpolster 204 bis 206 bestehen können, im größeren Maßstab dargestellt. Die oberste Schicht der Polsterung 203 kann falls erforderlich durch einen flammfesten Bezugstoff 207, der schematisch als Gewirke dargestellt ist, gebildet sein. Die Herstellungsart bzw. Ausbildung des verwendeten Bezugstoffes ist nicht an die dargestellte Ausführungsform gebunden und beliebig wählbar. Bevorzugt besteht ein derartiger Bezugstoff jedoch aus 59% Wolle, 33%Baumwolle und 8% Polyester. Es ist aber auch möglich, Bezugstoffe aus 81%Baumwolle und 19% Polyester zu verwenden. Derartige flammfeste bzw. flammenhemmende Bezugstoffe sind aus dem Stand der Technik bekannt und es können beliebige dafür in Frage kommende auch nicht flammfeste Bezugstoffe verwendet werden.

Unterhalb des Bezugstoffes 207 kann falls benötigt eine Flammschutzschicht 208 angeordnet sein, die aus einem Kunststoffschaum, insbesondere einem Polyätherschaumstoff 209 gebildet sein kann. Das Rohmaterial dieses Polyätherschaumstoffes 209 kann wenn erforderlich zusätzlich mit einem flüssigen Flammschutzmittel 210, welches in der Zeichnung schematisch durch strichlierte Linien angedeutet ist, vermischt sein.

Es ist aber auch möglich, daß der Bezugstoff ohne Flammschutzschicht, z.B. direkt oder über eine dünne Verbindungsschicht z.B. einer bereits bei ca. 80 C erweichender und als Kleberschicht verwendbarer Polyäther- oder Polyesterschaumschicht oder einen anderen Kunststoffschaum auf eine Zwischenschicht 211 aus einer PE- oder PU-Folie aufkaschiert ist.

Die Verbindungs- oder Flammschutzschicht 208 ist zwischen dem Bezugstoff 207 und der Zwischenschicht 211 angeordnet, die durch eine feuchtigkeitsdichte Sperrfolie 212, z.B. eine PE- bzw. PU-Folie, gebildet ist. Eine Dicke dieser Folie ist zum besseren Verständnis in überproportionaler Vergrößerung dargestellt, ebenso wie in diesen gegebenenfalls angeordneten porenartigen Öffnungen 213. Durch diese porenartigen Öffnungen 213 soll eine "Atmung" durch die Sperrfolie 212 hindurch erreicht werden. Dadurch sollen günstige Sitzeigenschaften erzielt und eine Schweißbildung bei Benutzung der Polsterung durch eine Person verhindert werden. Andererseits soll aber durch die flüssigkeitsdichte Sperrfolie 212 erreicht werden, daß vor dem Aufschäumen eines aus Kunststoffschaum bestehenden darunterliegenden Stützkörpers der flüssige Kunststoff nicht in die Verbunds- bzw. Flammschutzschicht 208 eintritt und dort aushärtet.

Der Stützkörper 214, welcher beispielsweise aus einem Formkalt-Kunststoffschaum gebildet ist, weist bevorzugt ein Raumgewicht von 40 bis 80 kg/m auf.

Weiters ist es wenn nötig auch möglich den Kunststoffschaum mit 20 bis 50 Gewichtsteilen, bevorzugt mit 35 Gewichtsteilen pulverförmigem Flammschutzmittel 215 zu versetzen, welches schematisch durch kleine Ringe in der Schnittfläche des Stützkörpers 214 dargestellt ist. Das Flammschutzmittel 215 besteht aus einem Pulver aus Melaminharz und bzw. oder Aluminiumhydroxyd und bzw. oder Amonpolyphosphat.

Der Stützkörper 214 wird bevorzugt unmittelbar auf die Sperrfolie 212 aufgeschäumt, wodurch ein fester Verbund zwischen dieser und dem Stützkörper 214 hergestellt wird.

Aus der Darstellung in Fig.12 ist weiters ersichtlich, daß in dem Stützkörper 214 Ausnehmungen 216 angeordnet sind. Diese Ausnehmungen 216 durchdringen den Stützkörper 214 und verlaufen in etwa parallel zu einer durch einen Pfeil 217 gekennzeichneten Belastungsrichtung. Die Ausnehmungen 216 sind im vorliegenden Ausführungsbeispiel als zylindrische Kegelstümpfe ausgebildet, wobei eine kleinere Querschnittsfläche 218 der Zwischenschicht 211 zugewendet ist, während eine größere Querschnittsfläche 219 der gegenüberliegenden Oberfläche des Stützkörpers 214 zugewandt ist. In etwa deckungsgleich mit der Querschnittsfläche 218 der Ausnehmung 216 ist in der Zwischenschicht 211 eine Öffnung 220 angeordnet. Dadurch werden die Kavernen bzw. offenen Zellen in der Verbindungs- bzw. Flammschutzschicht 208 oder im Bezugstoff 207 direkt mit einem Innenraum 221 der Ausnehmungen 216 verbunden.

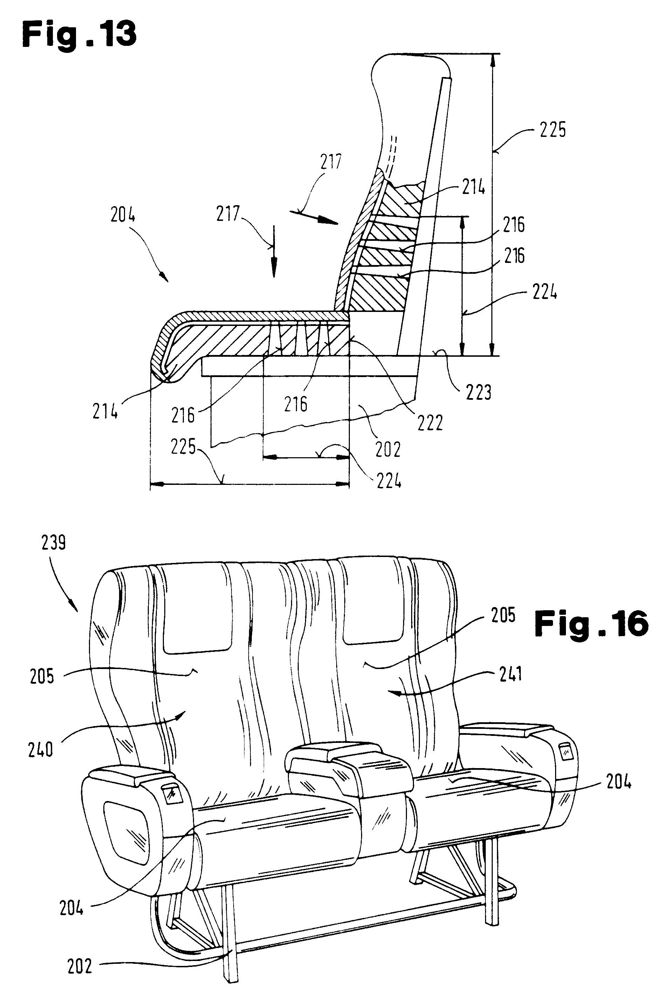

Wie in Fig.13 gezeigt, verlaufen die Ausnehmungen 216 sowohl im Sitzpolster 204 als auch im Rückenpolster 205 in etwa parallel zu der jeweils durch den Pfeil 217 angedeuteten Belastungsrichtung. Wie weiters aus dieser Darstellung, in der der Sitzpolster 204 und der Rückenpolster 205 in ihrer Einbaulage auf dem Traggestell 202 gezeigt sind, ersichtlich, erstrecken sich die Ausnehmungen 216 von den einander zugewandten Enden 222,223 des Sitzpolsters 204 und des Rückenpolsters 205 in Richtung der voneinander distanzierten Enden jeweils nur über eine Länge 224 des Sitzpolsters 204 bzw. des Rückenpolsters 205. Die Länge 224 ist dabei zwischen 25 und 50% einer Gesamtlänge 225 des Sitzpolsters 204 bzw. des Rückenpolsters 205.

Bevorzugt sind außer in den durch die Länge 224 begrenzten Bereichen ansonsten in den Stützkörpern 214 keine Ausnehmungen 216 angeordnet. Selbstverständlich ist es aber auch möglich, in den übrigen Bereichen des Sitzpolsters 204 bzw. Rückenpolsters 205 Ausnehmungen 216 anzuordnen, wobei jedoch deren Anzahl bzw. deren Querschnittsfläche erheblich geringer sein kann, als in diesem Bereich. Wird dementsprechend vorgegangen, kann nämlich auch dann, wenn über die Länge 224 eine Vielzahl von Ausnehmungen zur besseren Durchlüftung der sehr stark belasteten Bereiche des Sitzes 201 angeordnet ist, eine ausreichende Seitenstabilität der Sitz- bzw. Rückenpolster 204,205 erreicht werden.

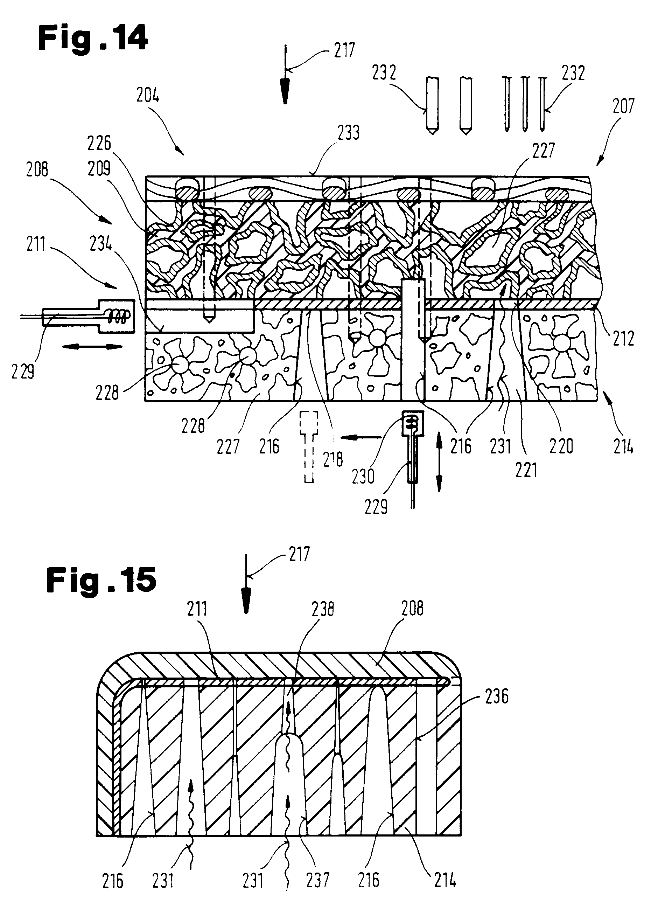

In Fig.14 ist anhand eines Schnittes durch den Sitzpolster 204 noch gezeigt, daß die zwischen dem Bezugstoff 207 und der Zwischenschicht 211 angeordnete Verbindungs- bzw. Flammschutzschicht 208 aus einem Kunststoffschaum mit überwiegend offenen Zellen - also einem schwammartigen Kunststoff und somit einem Weichschaumstoff - bestehen kann. Um das Flammschutzverhalten dieses unmittelbar unter dem Bezugstoff 207 angeordneten Kunststoffes falls nötig entsprechend zu verbessern, kann die Flammschutzschicht 208, die bevorzugt aus Polyätherschaumstoff 209 mit einem Raumgewicht von 15 bis 35 kg/m³ besteht und eine Dicke von 3 bis 8 mm aufweist, mit einem flüssigen Flammschutzmittel 226 getränkt sein. Um die Wirkung dieses Flammschutzmittels besser erläutern zu können, wurde im Bereich der Schnittfläche die offene Zellstruktur, welche am besten mit einem räumlichen Fachwerk verglichen werden kann, schematisch dargestellt. Durch das Tränken wird diese Zellstruktur, also die das Raumfachwerk bildenden Stege allseitig mit dem Flammschutzmittel 226 überzogen. Dadurch wird das Brandverhalten bereits in der ersten Phase einer Flammeinwirkung verbessert. Dazu kommt noch, daß selbst bei einer Zerstörung dieser aus Flammschutzmitteln 226 bestehenden Schutzschicht auch in dem die Zellstruktur bildenden Kunststoff, wie bereits in Fig.12 erläutert, ein flüssiges Flammschutzmittel eingemischt ist, welches in dem aufgeschäumten Material bereits enthalten ist. Durch die Kombination dieser beiden Flammschutzmittel wird erreicht, daß nicht nur das Brandverhalten, sondern vor allem auch die Rauchentwicklung und die Rauchgasdichte bei der Flammentwicklung gezielt gesteuert werden kann.

Auch der Stützkörper 214 besteht aus einem Kunststoff, der zum überwiegenden Teil offene Zellen 227 aufweist. Auch in einem derartigen, mit überwiegend offenen Zellen 227 versehenem Kunststoffmaterial sind zwischendurch einzelne geschlossene Zellen 228 vorgesehen.

Dieses Kunststoffmaterial kann zusätzlich mit in das Rohmaterial vor dem Aufschäumen eingemischten festen Flammschutzmitteln 215 versetzt sein, um das Brandverhalten und auch die Rauchgasbildung maßgeblich zu beeinflussen. Der Kunststoff des Stützkörpers 214 ist jedoch nicht weich elastisch sondern hart eingestellt.

Dazu kommt, daß durch das Beimengen dieser pulverförmigen Flammschutzmittel auch das Abtropfverhalten des Kunststoffschaumes während der Flammeinwirkung so beinflußt werden kann, daß dieser nicht brennend abtropft und somit eine Sekundärzündung von unterhalb der Sitze angeordneten Werkstoffen oder Materialien zuverlässig verhindert wird.

Eine weitere wichtige und vorteilhafte Eigenschaft dieser Werkstoffkombination liegt darin, daß der Polyätherschaum der Flammschutzschicht 208 für den an sich schwer entflammbaren Bezugstoff 207 keine Dochtwirkung ausüben kann, also nicht immer wieder zu Folgezündungen führen kann, da aufgrund der Tränkung der Flammschutzschicht 208 mit dem flüssigen Flammschutzmittel 226 keine Weiterleitung der Flammen möglich ist.

Eine Rohstoffmixtur für die Herstellung eines Kunststoffschaumes für die Flammschutzschicht 208 kann beispielsweise aus 100 Gewichtsteilen Standardpolyol, 43Gewichtsteilen TDI 8020, 11 Gewichtsteilen TDI6535 (beispielsweise von der Firma Bayer) aus 0,12 Gewichtsteilen Tertiäre Amine, 1,20 Gewichtsteile Stabilisatoren, 0,4 Gewichtsteile 10/2 Oktat und 8 Gewichtsteile flüssiges Flammschutzmittel bestehen. Ein derartiger Kunststoffschaum wird bevorzugt als Block hergestellt und nach der Aufschäumung in Platten oder Bahnen mit der gewünschten Schichtstärke geschnitten, wobei als Schichtstärke für die Flammschutzschicht eine Dicke von 3 bis 8 mm in Frage kommt.

Die Platten für die Flammschutzschicht 208 weisen eine Dicke von 3 bis 8 mm auf. Die Platten für die Verbindungsschicht etwa 1-3 mm. Die Flammschutzschicht 208 kann auch mit flüssigem Flammschutzmittel getränkt werden, wobei nach dem Tränken der Platten diese Quetschwalzen durchlaufen, um eine gleichmäßige Verteilung des flüssigen Flammschutzmittels 226 über die Oberfläche der Zellstruktur zu erhalten.

Bildet die Verbindungs- bzw. Flammschutzschicht 208 mit dem Stützkörper 214 ein einstückiges Sandwichelement, so ist zwischen diesen eine durchgehende feuchtigkeitsdichte Zwischenschicht 211, wie beispielsweise die dargestellte Sperrfolie 212, erforderlich. In diesem Fall wird nämlich die Verbindungs- bzw. Flammschutzschicht 208 mit oder auch ohne den Bezugstoff 207 und die durch eine durchgehende dichte Sperrfolie 212 gebildete Zwischenschicht 211, die untereinander verbunden oder aufeinander aufkaschiert sind in die Form eingelegt. Auf diese Zwischenschicht 211, die dem Formhohlraum zugewendet ist, wird der Stützkörper 214 aufgeschäumt. Um nunmehr einen ausreichenden Luftdurchsatz durch den Sitzpolster 204 in Belastungsrichtung - Pfeil 217 - zu ermöglichen bzw. zu gewährleisten, werden bei der Herstellung des Stützkörpers 214 Ausnehmungen 216 eingeformt. Diese Ausnehmungen können, wie schematisch angedeutet, Kegelstümpfe oder Pyramidenstümpfe oder Zylinder sein. Die dichte Sperrfolie 212 ist deshalb erforderlich, um beim Aufschäumen des Stützkörpers zu verhindern, daß der Kunststoff in der flüssigen Phase in die offenen Zellen der Flammschutzschicht 208 eindringt und in diesen offenen Zellen ausreagiert, wodurch das Dämpfungsverhalten und weiters auch der Widerstand gegen eine Flammeinwirkung nachteilig verändert werden würde. Um nun jedoch einen ausreichenden Luftdurchsatz von beispielsweise 30 Liter pro Minute bei Atmosphärendruck einzuhalten und die entsprechende Elastizität der Flammschutzschicht 208 zu gewährleisten und eine Schweißbildung beim Sitzen auf den Sitzpolster 204 zu vermeiden, werden die Innenräume 221 der Ausnehmungen 216 mit den offenen Zellen 227 bzw. den sich aus diesen Zellen zusammensetzenden Kavernen in der Verbindungsbzw. Flammschutzschicht 208 bzw. dem Bezugstoff 207 verbunden. Dies erfolgt nun beispielsweise, wie sehr vereinfacht und schematisch und zum besseren Verständnis der Erfindung teilweise auch größenmäßig stark verzerrt dargestellt, dadurch, daß in die Ausnehmungen 216 Heizstäbe 229, in die beispielsweise eine elektrische Heizwendel 230 eingebaut ist, eingeführt werden. Durch Hitzeeinwirkung wird zumindest in die Zwischenschicht 211 eine Öffnung 220 eingebrannt bzw. wird das Kunststoffmaterial der Zwischenschicht 211 weggeschmolzen. Dadurch wird ein direkter Durchgang von Außenluft 231 in die Zellen 227 bzw. den Bezugstoff 207 erreicht und das Atmungsverhalten bzw. das Sitzklima des Sitzpolsters 204 wird erheblich verbessert. Wie im vorliegenden Ausführungsbeispiel gezeigt, entspricht ein Querschnitt der Öffnung 220 im wesentlichen dem Querschnitt der der Zwischenschicht 211 zugewandten Querschnittsfläche 218 der Ausnehmungen 216. Es ist aber ebenso möglich, daß die Öffnungen 220 in der Zwischenschicht 212 kleiner sind, als die Querschnittsfläche 218 der Ausnehmungen 216. Um in jedem Fall eine gute Luftdurchlässigkeit auch durch die Verbindungs- bzw. Flammschutzschicht 208 zu ermöglichen, kann der Sitzpolster 204 nach dem Aufschäumen des Stützkörpers 214 genadelt werden. D.h. es werden in Belastungsrichtung - Pfeil 217 - in Fig.14 schematisch dargestellte Nadeln 232, die beheizt und einen Durchmesser von 0,5 bis 5 mm aufweisen können und vorzugsweise auf eine Temperatur von 120 Grad C bis 160 Grad C aufgeheizt sind, durch den Bezugstoff 207 und die Flammschutzschicht 208 sowie die Zwischenschicht 211, bevorzugt bis in den Stützkörper 214 durchgestoßen, wie dies mit strichlierten Linien schematisch in Fig.14 angedeutet ist. Unter anderem ist es auch möglich, daß mehrere dünne Nadeln 232 verwendet werden, die derart positioniert sind, daß sie jeweils im Bereich der Öffnungen 220 die Flammschutzschicht 208 durchstoßen. Dadurch soll eine geradlinige Luftbewegung mit möglichst wenig Widerstand zwischen einer Sitzfläche 233 des Sitzpolsters und einer Unterseite desselben hergestellt werden.

Desweiteren hat sich jedoch gezeigt, daß eine Ent- und Belüftung der Sitzfläche 233 vor allem dann verbessert werden kann, wenn im Stützkörper 214 auch parallel zur Sitzfläche 233 verlaufende Ausnehmungen 234 angeordnet sind. Diese können sich beispielsweise von den Seitenflächen der Sitzpolster bzw. Rückenpolster in den Mittelbereich derselben erstrecken. Nachdem derartige Öffnungen in Belastungsrichtung - Pfeil 217 - nur eine den Durchmesser bzw. den Öffnungsquerschnitt entsprechende Breite aufweisen, die meist wesentlich geringer ist, als die Dicke des Stützkörpers 214, kann die Ausnehmung 234 unter Belastung auf einen wesentlich geringeren als den normalen Querschnitt zusammengedrückt werden, wodurch die darin enthaltene Luft über die Seitenflächen nach außen gepreßt werden kann.

Durch Verwendung eines Heizstabes 229 ist es auch hier möglich, allerdings über den Längsverlauf der Ausnehmung 234, die Zwischenschicht 211 beispielsweise durch Wegschmelzen oder dergleichen zu entfernen. Selbstverständlich ist es aber auch möglich, anstelle der Heizstäbe 229 entsprechende rotierende Werkzeuge, wie Fräser oder Zwickwerkzeuge einzusetzen, mit welchen die Zwischenschicht 211 im Bereich der Ausnehmungen 216 bzw. 234 entfernt werden kann.

Im Rahmen der Erfindung ist es aber auch möglich, daß die Sitzpolster 204 bzw. Rückenpolster 205 in Richtung ihrer Gesamtlänge mit Ausnehmungen 216 bzw. 234 versehen sein können. Vor allem, wenn derartige parallel zur Gesamtlänge 225 verlaufende Ausnehmungen 234 vorgesehen sind, erweist es sich als vorteilhaft, wenn diese auf der dem Rückenpolster 205 zugewandten Stirnseite münden, wobei es dann vorteilhaft ist, wenn der Rückenpolster 205 auf dem Sitzpolster 204 aufliegt. Dann kann die durch die Bewegungen am Sitz verdrängte Luft durch die Ausnehmungen 234 ungehindert nach hinten ausströmen, wogegen sie in der entgegengesetzten Richtung durch die Unterschenkel oder unter dem Sitz plazierte Taschen oder dergleichen am Ausströmen behindert werden kann.

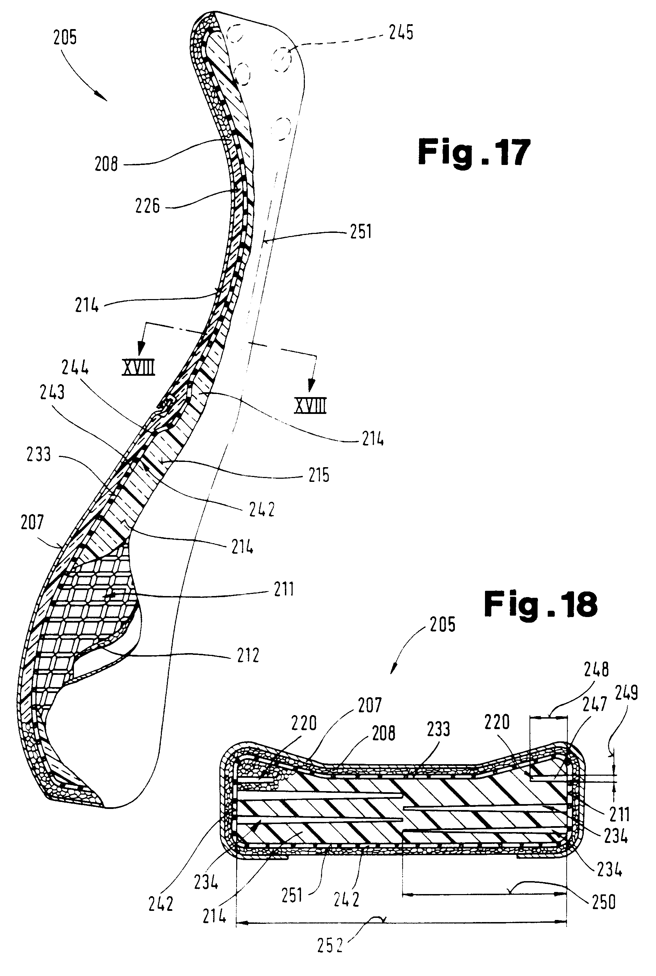

In Fig.15 ist in vereinfachter schematischer Darstellung ein Sitzpolster 235 gezeigt, bei welchem eine Flammschutzschicht 208 über eine Zwischenschicht 211 mit einem Stützkörper 214 zu einem Sandwichelement verbunden ist. Um nunmehr eine ausreichende Durchlüftung mit Außenluft 231 - schematisch durch gewellte Pfeile angedeutet - zu erreichen, ist dargestellt, daß die Ausnehmungen 216 unterschiedliche Querschnittsformen aufweisen können. So ist es möglich, daß sie, wie anhand einer Ausnehmung 236 gezeigt, zylinderförmig verlaufen oder daß sie beispielsweise in Art eines Kegels spitz verlaufen. Vor allem in Verbindung mit einer Ausnehmung 237 ist gezeigt, daß die Ausnehmung in Belastungsrichtung - gemäß Pfeil 217 - stark wechselnde Querschnitte aufweisen kann. So ist es möglich, im unteren Bereich des Stützkörpers 214 eine Ausnehmung 237 mit wesentlich größerem Querschnitt zu verwenden, während eine sich daran anschließende Ausnehmung 238 nur einen Bruchteil der Querschnittsfläche aufweist. Diese Ausnehmung 238 erstreckt sich dann von der Ausnehmung 237 mit größerem Querschnitt bis in den Bereich der Flammschutzschicht 208 bzw. durchdringt diese, sodaß eine direkte Verbindung zwischen den in der Flammschutzschicht 208 angeordneten Luftleitkanälen bzw. Kavernen und der Ausnehmung 237 hergestellt wird. Durch die Verwendung einer relativ kurzen Ausnehmung 238 mit geringem Querschnitt wird bei Bewegungen des Benutzers am Sitz eine relativ hohe Luftgeschwindigkeit erzielt und es kommt in der unmittelbar daran anschließenden Ausnehmung mit größerem Querschnitt, die nach unten hin offen ist, zu einem besseren Austausch zwischen der verbrauchten Luft und der neu zugeführten Außenluft 231, sodaß bei einer nachfolgenden Entlastung des Sitzpolsters 235 auch in diesem Fall ein gewisser Anteil an Frischluft nachströmen kann.

In Fig.16 ist eine Doppelsitzbank 239 mit zwei Sitzen 240,241 dargestellt. Jeder Sitz 240,241 besteht aus einem Sitzpolster 204 für eine Sitzfläche und einem Rückenpolster 205 für eine Rückenlehne. Die Polster 204 und die Polster 205 der beiden Sitze 240 und 241 sind identisch aufgebaut jedoch spiegelbildlich ausgebildet. Sie können aber auch für einen Einzelsitz oder eine Mehrfachsitzbank verwendet werden. Außerdem kann ein Sitz 240 oder 241 auch aus einem einzigen oder mehreren Polstern bestehen.

Die Polster 204 und 205 werden in ein generell mit 202 bezeichnetes Traggestell eingelegt. Das Traggestell 202 kann auch jede beliebige andere Form aufweisen.

In Fig.17 und 18 ist ein Rückenpolster 205 für die Rückenlehne in größerem Maßstab und teilweise geschnitten dargestellt. Der Polster 205 umfaßt einen Stützkörper 214, der bevorzugt aus einem Formkaltschaum besteht und in einer den gewünschten äußeren Abmessungen des Stützkörpers 214 entsprechenden Form hergestellt wird. Er besteht aus einem elastischen offenzelligen Kunststoffschaum. Bevorzugt ist er einteilig ausgebildet. Der Kunststoffschaum kann wie schematisch durch kleine Striche im Bereich der Schraffur angedeutet mit einem pulverförmigen Flammschutzmittel 215, z.B. Melaminharz und bzw. oder Aluminiumhydroxyd, versetzt sein. Auf der Oberseite des Stützkörpers 214 ist eine Zwischenschicht 242 aus gitter- bzw. netzförmig verlegten hochtemperaturfesten Fäden 243 und 244 angeordnet. Diese Zwischenschicht 242 wird von einer Flammschutzschicht 208, die auf der vom Stützkörper 214 abgewendeten Seite der Zwischenschicht 211 vorgesehen ist, abgedeckt. Diese Flammschutzschicht 208 ist wie wieder durch Striche in der Schraffur angedeutet mit einem flüssigen Flammschutzmittel 226 getränkt. Das flüssige Flammschutzmittel 226 ist z.B. chlor-, brom- oder phosphorhaltig. Vorteilhaft ist es, wenn das flüssige Flammschutzmittel mit Aluminiumoxydhydrat vermischt ist, dessen Korngrößenverteilung vorzugsweise zwischen 0,2 und 110 m beträgt. Diese Flammschutzschicht 208 besteht bevorzugt aus einem Polyäther, wobei der Schaumkunststoff einen Teil eines Kunststoffschaumblockes bildet, der nachträglich mit einem flüssigen Flammschutzmittel getränkt wird. Die Flammschutzschicht 208, die Zwischenschicht 211, und der Stützkörper 214 sind in über die Fläche verteilten Bereichen über einen Kleber 245 miteinander verbunden. Die Flammschutzschicht 208 wird auf der vom Stützkörper 214 abgewendeten Seite mit einem schwer entflammbaren Bezugstoff 207 abgedeckt.

Aus Fig. 18 ist besser ersichtlich, daß im Stutzkörper 214 Ausnehmungen 234 angeordnet sind. Diese Ausnehmungen 234 erstrecken sich im vorliegenden Ausführungsbeispiel von Seitenflächen 246 in Richtung der Polstermitte. Die Ausnehmungen 234 sind im vorliegenden Ausführungsbeispiel durch zylindrische Kegelstümpfe gebildet. Es ist hierbei jedoch die Form der Ausnehmungen 234 frei wählbar. So können anstelle des zylinderförmigen Kegelstumpfes auch mehreckige Pyramidenstümpfe oder Ausnehmungen mit einem pyramidenstumpfförmigen Querschnitt vorgesehen werden. Von Vorteil ist hierbei, daß, wie aus der Zeichnung ersichtlich, Öffnungen 247 durch die Flammschutzschicht 208 und die Zwischenschicht 211 abgedeckt sind. Eine Länge 248 und ein Durchmesser 249 im Bereich der Öffnung 247 können, wie aus der Zeichnung ebenfalls ersichtlich, unterschiedlich sein. Durch die unterschiedliche Länge kann in den verschiedenen über den Polster 205 verteilten Bereichen eine unterschiedliche Entlüftung erfolgen. Außerdem können in stärker belasteten Bereichen wie beim Rückenpolster 205 im Mittelbereich weniger Ausnehmungen 234 bzw. Ausnehmungen mit einem geringeren Durchmesser 249 bzw. Volumen angeordnet werden. Die Länge 248 der Ausnehmungen 234 wird beispielsweise in dem der Sitzfläche 233 zugewandten Bereich geringer sein als eine Länge 250 im Bereich einer Rückfläche 251. Dazu kommt, daß sich die Ausnehmungen 234 jeweils nur über einen Teil einer Stützkörperbreite 252 erstrecken. Dabei ist es jedoch auch möglich, anstelle der in den Fig.17 und 8 gezeigten Ausnehmungen 234 Ausnehmungen zu verwenden, die sich über eine gesamte Stützkörperbreite 252 von einer Seitenfläche 246 zur anderen Seitenfläche erstrecken.

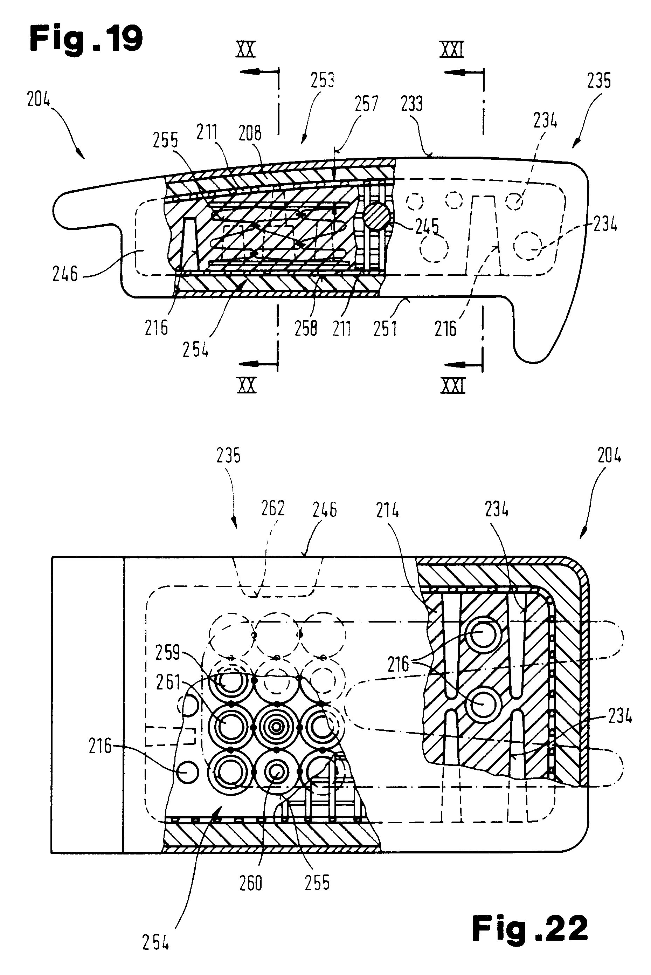

In Fig.19 ist ein Sitzpolster 204 gezeigt, der eine Sitzfläche 233 aufweist. Bei diesem Sitzpolster 204 ist vorzugsweise der Sitzfläche 233 aber auch der Rückfläche 251 und den Seitenflächen 246 die Zwischenschicht 211 zugeordnet, die aus einem Netz gebildet ist, welches aus hochtemperaturfesten Materialien, wie beispielsweise Fäden, aus Glas, Keramik oder Metall bzw. Kohle oder einer feuchtigkeitsdichten Sperrfolie bestehen kann. Desweiteren sind in dem aufgerissen dargestellten Bereich, in welchem die einzelnen Schichten des Sitzpolsters 204 besser zu ersehen sind, jene über die Seitenfläche 246 distanzierten Bereiche zu ersehen, in welchen mit dem Kleber 245 die Zwischenschicht 211 auf den Stützkörper 214 und die Flammschutzschicht 208 auf der Zwischenschicht 211 festgeklebt ist. Diese Bereiche sind, wie schematisch angedeutet, mit Abstand voneinander über die Seitenflächen 246 verteilt angeordnet, sodaß der Luftdurchsatz des Sitzpolsters 204 durch den Kleber 245 nicht wesentlich nachteilig beeinflußt wird. Zur Befestigung des Bezugstoffes 207 kann auf der Rückfläche des Sitzpolsters 204 ein Klettband angeordnet sein.

Wie weiters aus Fig.19 zu ersehen ist, ist im Bereich einer zentralen Sitzfläche 253 des Sitzpolsters 204, auf der zum Beispiel das Gesäß eines Benutzers aufliegt, eine metallische Stützvorrichtung 254, z. B. ein Federkern 255 aus Stahldraht im Stützkörper 214 eingeschäumt. Eine Deckfläche 256 des Federkerns 255 ist dabei in einem Abstand 257, der bevorzugt zwischen 0,5 und 70 mm betragen kann, von einer Oberseite des Stützkörpers 214 bzw. der Zwischenschicht 211 distanziert angeordnet. Durch diese Überdeckung der Deckfläche 256 mit Kunststoffschaum des Stützkörpers 214 soll in Verbindung mit der sehr elastischen Flammschutzschicht 208 ein ausreichender Sitzkomfort hergestellt werden, sodaß auch bei Benutzung des Sitzpolsters 204 durch eine sehr schwere Person, deren Sitzkomfort nicht beeinträchtigt ist bzw. die Person nicht direkt auf den Metallteilen des Federkerns 255 aufsitzt. Eine Basisfläche 258 des Federkerns ist dagegen nahezu bündig mit einer Unterseite des Stützkörpers 214 bzw. der Zwischenschicht 211 angeordnet. Dadurch wird bei Verwendung von Sitzpolstern 204, bei welchen der Stützkörper 214 allseitig durch eine Zwischenschicht 211 und eine Flammschutzschicht 208 umgeben ist, erreicht, daß sich die vom Federkern 255 herrührenden Belastungen gleichmäßig über die Zwischenschicht 211 verteilen. Bei Sitzpolstern 204 bzw. Rückenpolstern 205, bei welchen im Bereich der Rückfläche 251 derselben keine Zwischenschicht 211 bzw. keine Flammschutzschicht 208 angeordnet ist, hat dies den Vorteil, daß sich der Federkern 255 bzw. dessen Basisfläche 258 direkt auf einem Traggestell 202 abstützen kann. Wie anhand dieses Ausführungsbeispiels weiter gezeigt ist und im einzelnen anhand der Schnittdarstellungen noch erläutert wird, ist auch bei einer derartigen Ausgestaltung eines Sitzpolsters 204 mit einem Federkern 255 die Anordnung von Ausnehmungen 216 bzw. 234 möglich. Wie aus dieser Darstellung grob ersichtlich, können diese Ausnehmungen 216 senkrecht zur Rückfläche 251 des Polsters 204 oder auch parallel zu dieser sowohl senkrecht zur Seitenfläche 246 als auch parallel zu dieser verlaufen.

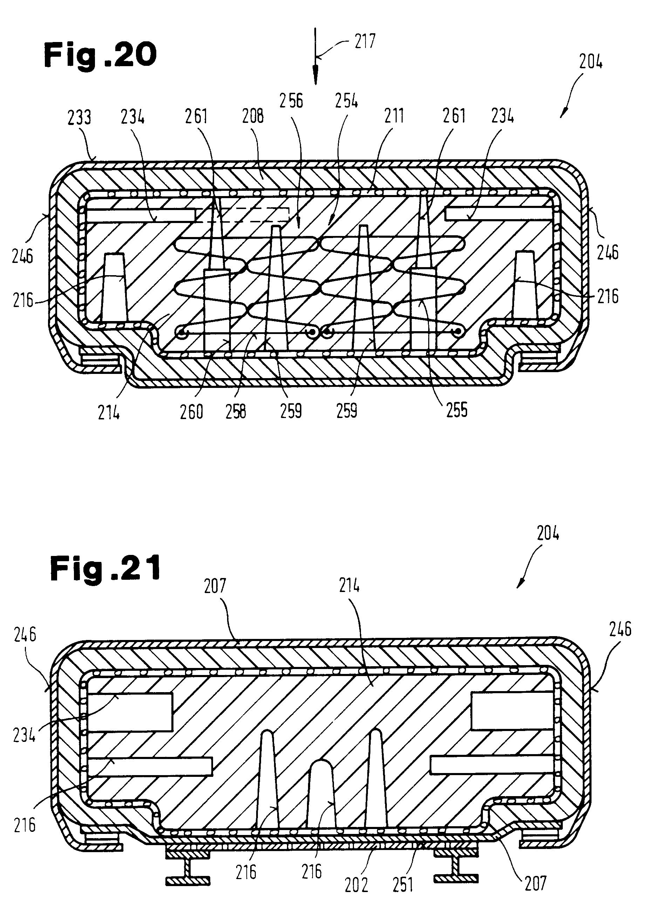

In Fig.20 ist der Verlauf der Ausnehmungen 216 bzw. 234 im Detail dargestellt. Unter anderem ist aus dieser Darstellung ersichtlich, daß sich Ausnehmungen 259,260,261 auch durch das Innere des Federkerns 255 bzw. der Stützvorrichtung 254 erstrecken können. Dieser Stützvorrichtung 254 kann beispielsweise auch durch entsprechend gestaltete Federvorrichtungen aus Kunststoff oder Blattfederelemente oder entsprechend gestaltete Gummifederelemente gebildet sein. Wie ersichtlich, können sich die Ausnehmungen 259 und 260 senkrecht zu einer Basisfläche 258 des Federkerns 255 erstrecken. Sie laufen im Inneren zwischen den durch Spiralfederelemente gebildeten Federkern 255 hindurch und enden beispielsweise wie die Ausnehmungen 259 in Bereichen oberhalb der Deckfläche 256 des Federkerns 255. Anhand der Ausnehmungen 260,261 ist weiters gezeigt, daß sich Ausnehmungen 260 mit einem größeren Querschnitt bis etwa in den Mittelbereich des Federkerns 255 erstrecken können, an welche dann Ausnehmungen 261 mit geringerem Querschnitt anschließen, die sich beispielsweise durch die Zwischenschicht 211 hindurch bis in den Bereich einer Flammschutzschicht 208 erstrecken. Dadurch wird gewährleistet, daß die oberhalb des Federkerns 255 liegende Schicht des Stützkörpers 214, die durch den größeren Widerstand, den der Federkern 255 einer Verformung in Belastungsrichtung - Pfeil 217 - entgegensetzt, stärker zusammengedrückt wird, nicht allzusehr geschwächt wird, aber trotzdem eine relativ hohe Luftmenge durch diese Ausnehmungen 261 und dem bei der Benutzung des Sitzes durch eine Person erzielten hohen Luftaustausch eine bessere Durchlüftung der Sitzfläche 233 erzielt werden kann. Diese verbesserte Durchlüftung wird auch noch durch die Ausnehmungen 234 erreicht, die parallel zur Sitzfläche 233, jedoch senkrecht zu den Seitenflächen 246 verlaufen. Vor allem können sich diese Ausnehmungen - wie mit strichlierten Linien angedeutet - auch bis weit in den Bereich oberhalb der Stützvorrichtung 254 bzw. des Federkerns 255 erstrecken, sodaß auch in seitlicher Richtung, in welcher der Lufttransport, wie bereits anhand der vorangegangenen Ausführungsbeispiele näher erläutert wurde, noch verstärkt durchführbar ist, erzielt werden kann. Der geringe Durchmesser im Vergleich zur Dicke des Stützkörpers 214 führt zu einer Pumpwirkung, die ähnlich wie bei einer Membranpumpe funktioniert, in dem die Ausnehmungen 234 fast zur Gänze zusammengedrückt werden und dabei die verbrauchte warme Luft in Richtung der Seitenflächen 246 abblasen, während bei einer geringfügigen Entlastung der Sitzfläche 233 in umgekehrter Richtung Frischluft zumindest in die Ausnehmungen 234 angesaugt wird. Dadurch, daß beim Zusammendrücken der Ausnehmung 234, und dies gilt insbesondere auch für die Ausnehmungen 261, ein relativ hoher Luftdruck durch die Pumpwirkung entsteht, kann die Luft auch durch die Kavernen bzw. offenen Zellen der Flammschutzschicht 208 sowie die Kavernen einer Zwischenschicht 211 durchgedrückt werden. Ist eine Oberfläche des Stützkörpers 214 zusätzlich mit einer flüssigkeits- bzw. feuchtigkeitsdichten Zwischenschicht 211 umgeben, so muß diese im Bereich der Ausnehmungen 234 geöffnet werden, sodaß ein entsprechender Luftaustausch durch diese Sperrfolie hindurch gewährleistet werden kann.

In Fig.21 ist weiters gezeigt, daß die Ausnehmungen in einem weiteren Querschnittsbereich des Sitzpolsters 204 anders verlaufen können bzw. eine größere Querschnittsfläche und eine höhere Anzahl an derartigen Ausnehmungen 234 bzw. 216 vorgesehen sein können. Bei diesem Ausführungsbeispiel ist weiters in Abänderung zur Darstellung in Fig.19 gezeigt, daß sich die Flammschutzschicht 208 und die Zwischenschicht 211 nur bis in den Bereich der Seitenflächen 246 des Sitzpolsters 204 erstrecken. Eine Unterseite des Stützkörpers 214 liegt dabei entweder auf der Zwischenschicht 211, die durch ein entsprechendes hochfestes Draht- oder Glasgewebe, Gewirke oder ein Gitter gebildet sein kann oder auch unter Weglassung dieser Zwischenschicht 211 direkt auf Trägern des Traggestells auf. Um eine höhere Festigkeit und vor allem einen höheren Widerstand gegen Beschädigungen des Stützkörpers 214 zu erzielen, ist es überdies auch möglich, daß anstelle der Zwischenschicht 211 oder zusätzlich zu dieser die Rückfläche 251 des Sitzpolsters 204, wie mit strichlierten Linien zusätzlich angedeutet, mit einem Bezugstoff 207 überzogen sein kann.

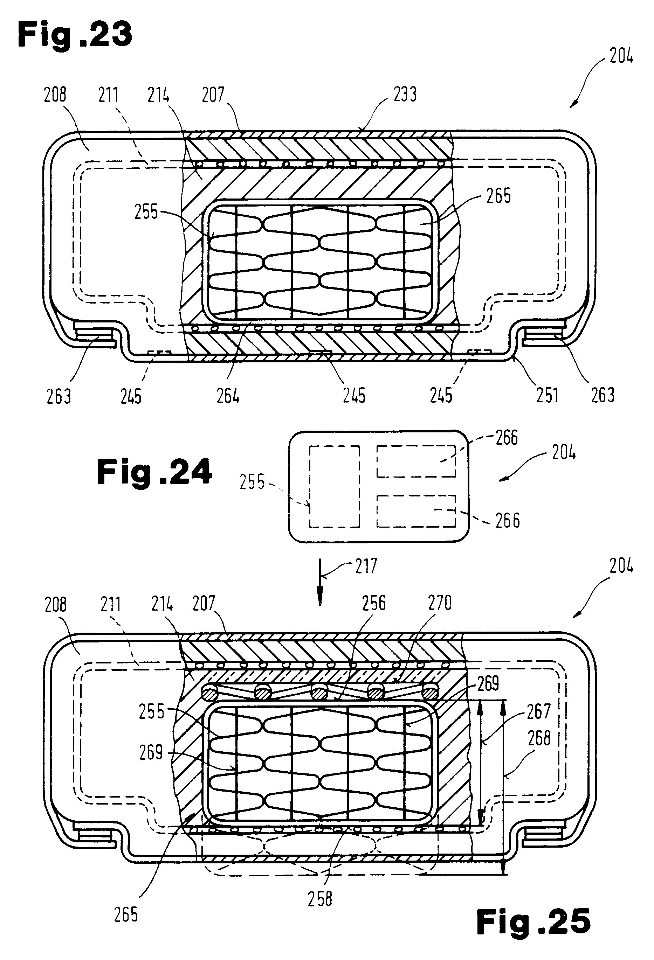

In Fig.22 ist anhand einer Unterschicht des Sitzpolsters 204 gemäß den Fig.19 bis 11 eine mögliche Aufteilung der Ausnehmungen 216 bzw. 234 und 259,260,261 in Verbindung mit einer Stützvorrichtung 254, die durch einen Federkern 255 gebildet ist, dargestellt. Aus dieser Darstellung zeigt sich, daß neben der durch den Federkern 255 erzielten Versteifung der zentralen Sitzfläche 253 die, wie mit strichpunktierten Linien angedeutet, durch das Gesäß und die dem Sitzpolster 204 zugewandte Seite der Oberschenkel gebildet ist, die Anzahl der Ausnehmungen 216,234,259,260,261 größer ist als in den übrigen Bereichen. Dadurch soll in diesen am stärksten sowohl von den Körperausdünstungen als auch vom Gewicht her belasteten Bereichen ein entsprechender Luftaustausch und durch die Mitverwendung der Stützvorrichtung 254 auch eine hohe Lebensdauer des Sitzpolsters 204 erzielt werden. Gleichzeitig wird dadurch aber auch eine Gewichtsverringerung des Sitzpolsters 204 erreicht, da in jenem Bereich, in dem der Federkern angeordnet ist, durch die Anordnung einer höheren Zahl von Ausnehmungen 216,234,259,260 und 261 an Gewicht bei dem aus Kunststoffschaum bestehenden Stützkörper 214 gespart wird. Reicht diese Gewichtsersparnis nicht aus, um das Mehrgewicht des Federkerns 255 aufzufangen, so können beispielsweise auch in den Seitenflächen 246 Ausnehmungen 262 vorgesehen sein, die dann vornehmlich der Gewichtsverringerung dienen und nur mehr unwesentliche Verbesserungen des "Sitzklimas" eines derartigen Sitzpolsters 204 bringen.

Selbstverständlich ist ein Federkern 255 bzw. eine entsprechend ausgebildete Stützvorrichtung 254 auch bei jenen Sitzen einsetzbar, bei welchen die Zwischenschicht 211 durch eine feuchtigkeits- bzw. flüssigkeitsdichte Sperrfolie 212 gebildet ist. In diesem Fall ist dann durch die anhand der Fig.11 bis 5 beschriebenen Maßnahmen bzw. Verfahren sicherzustellen, daß nach dem direkten Aufschäumen des Stützkörpers 214 auf die Sperrfolie 212 ein ausreichender Luftdurchgang in Richtung des Bezugstoffes 207 bzw. der Flammschutzschicht 208 hergestellt wird. Dies kann, wie bereits vorstehend erläutert, durch Aufschmelzen bzw. Abfräsen der Zwischenschicht 211 erfolgen. Ist zu dieser flüssigkeits- bzw. feuchtigkeitsdichten Sperrfolie 212 zusätzlich eine aus hochfesten Fasern bestehende Sperrfolie angeordnet, so kann auch diese im Bereich der Durchbrechungen mit größeren Öffnungen, beispielsweise durch Herausschneiden oder Abtrennen von einzelnen Federn oder Gitterteilen, entfernt werden, um eine höhere Luftdurchlässigkeit in Richtung der in dem aus offenzelligem Kunststoffschaum bestehenden Flammschutzschicht 208 gebildeten Kavernen erzielt werden.

In den Fig.23 - 25 sind weitere Ausführungsformen für einen Sitzpolster 204 dargestellt, wobei für deren Beschreibung für gleiche Teile die gleichen Bezugszeichen wie in den vorangegangenen Figuren verwendet werden.

Der Sitzpolster nach Fig.23 besteht wieder aus einem flammfesten Bezugstoff 207, einer Flammschutzschicht 208, einer Zwischenschicht 211 sowie einem Stützkörper 214. Der flammfeste Bezugstoff 207 ist auf einer Rückfläche 251 des Sitzpolsters 204 über einen Kleber 245 mit der Flammschutzschicht 208 verbunden, während der der Sitzfläche 233 zugewandte Teil des Bezugstoffes 207 über Klettbänder 263 auswechselbar angeordnet ist.

Im Inneren des durch einen mit festen Flammschutzmitteln versetzten Kunststoffschaum hergestellten Stützkörpers 214 ist als Stützvorrichtung 254 ein Federkern 255 eingeschäumt. Während bei den zuvor beschriebenen Ausführungsformen der Kunststoffschaum des Stützkörpers 214 den Federkern 255 zur Gänze durchsetzt, ist bei der vorliegenden Ausführungsform die Stützvorrichtung mit einer Kunststoffolie 264 umgeben bzw. in diese eingehüllt. Die Kunststoffolie 264 ist luftdicht und auch luftdicht verschweißt, sodaß sie mit der darin eingebetteten Stützvorrichtung 255 als Luftpolster 265 wirkt. Bei einer Belastung der Stützvorrichtung 254 bzw. des Federkerns 255 wird die Luft im Luftpolster 265 höher verdichtet, wobei der Sitz nach Entlastung, nicht zuletzt durch die Wirkung des Federkerns 255, wieder in sein ursprüngliche Lage zurückgeht. Der Vorteil dieser Ausführungsform liegt vor allem darin, daß ein entsprechendes Luftvolumen im Stützkörper 214 geschaffen wird, sodaß der Sitzpolster 204 in bedingtem Maß als Schwimmkörper verwendet werden kann. Wichtig ist hierbei nur, daß der Auftrieb des Sitzpolsters 204 so groß ist, daß eine im Wasser treibende Person genügend Auftrieb erhält, um sich über Wasser zu halten.

In Fig.24 ist eine andere Ausführungsvariante eines Sitzpolsters 204 gezeigt, der ebenfalls mit einem Federkern 255 ausgestattet sein kann. Um einen entsprechenden Auftrieb des Sitzpolsters 204 bei Verwendung als Behelfsschwimmkörper zu ermöglichen, sind im diesem Fall im Bereich der Oberschenkel des Benutzers Schwimmkörper 266 eingeschäumt. Diese Schwimmkörper können beispielsweise aus Styropor, Polyäthylenschaum oder jeglichen anderen, einen hohen Auftrieb erzeugenden Material bestehen. Der Vorteil des Polyäthylenschaumes liegt darin, daß dieser zusätzlich elastisch ist.

In Fig.25 ist eine andere Ausführungsform eines Sitzpolsters 204 gezeigt, der ähnlich wie der Sitzpolster nach Fig.23 aufgebaut ist und einen flammfesten Bezugstoff 207, eine Flammschutzschicht 208, eine Zwischenschicht 211 und einen aus Kunststoffschaum bestehenden Stützkörper 214 umfaßt. In dem Stützkörper ist zur Erhöhung der Lebensdauer und zum Verändern der Federungscharakteristik ein Stützvorrichtung 254, beispielsweise ein Federkern 255, angeordnet. Um nunmehr die Federcharakteristik an bestimmte Vorgaben anpassen zu können, ist eine Höhe 267 der Stützvorrichtung 254 zwischen einer Basisfläche 258 und einer Deckfläche 256 in einer in den Stützkörper 214 eingeschäumten Lage geringer, als eine Dicke 268 der Stützvorrichtung 254 bzw. des Federkerns 255 in entspanntem Zustand. Diese Vorspannung wird dadurch erreicht, daß die Basisfläche 258 und die Deckfläche 256 über Spannelemente 269 von einander distanziert sind, deren senkrecht zur Basisfläche 258 verlaufende Länge geringer ist, als die Dicke 268 des Federkerns 255 in unbelastetem Zustand. Dadurch ist es möglich, die Stützvorrichtung 254 bzw. den Federkern 255 in jedem beliebigen Ausmaß vorzuspannen, sodaß die Federungscharakteristik eines derartigen Sitzpolsters 204 in beliebiger Weise verändert werden kann.

In diesem Ausführungsbeispiel ist weiters gezeigt, daß die Deckfläche 256 mit einer Zwischenlage 270 abgedeckt sein kann bzw. eine derartige Zwischenlage direkt auf die Deckfläche 256 aufgelegt sein kann. Dadurch soll eine dickere Schicht und durch diese eine Verteilung der Belastung gleichmäßig auf den gesamten Federkern 255 erzielt werden, ohne daß vom Benutzer Teile des Federkerns 255 als Druckstellen störend empfunden werden. Eine derartige Zwischenlage 270 kann durch ein Netz oder Gitter oder ein Gewirke oder ähnliches aus Draht oder aus Glasfasern bestehen, wobei bevorzugt ein Gitter verwendet wird, welches eine entsprechend hohe Eigensteifigkeit hat, sodaß es die Deckfläche 256 brückenartig überspannen kann, um eine ausreichende Belastungsverteilung über die gesamte Deckfläche 256 des Federkerns 255 zu ermöglichen.

Weiters ist in diesem Ausführungsbeispiel auch angedeutet, daß eine Dichte des Kunststoffschaums des Stützkörpers 214 im Bereich zwischen der Deckfläche 256 der Stützvorrichtung 254 und der Zwischenschicht 211 höher sein kann, als die Dichte des Schaumkunststoffes in den übrigen Bereichen des Stützkörpers 214. Dies ist schematisch durch eine dichtere Schraffur des Bereiches zwischen der Deckfläche 256 und der Zwischenschicht 211 angedeutet. Dadurch kann erreicht werden, daß sich die Belastungen, die in Belastungsrichtung - Pfeil 217 - auf den Sitz 204 einwirken, gleichmäßig über den Federkern 255 aufgeteilt werden können. Durch die größere Härte eines dichteren Schaumstoffes des Stützkörpers 214 wird eine Art elastische Einlageplatte geschaffen, die die teilweise punktuell einwirkenden Belastungen durch die auf dem Sitz sitzende Person gleichmäßig auf den Federkern 255 verteilt. Dadurch werden Druckstellen durch einzelne Teile des Federkerns 255 vermieden.

Diese Erhöhung der Dichte des Schaummaterial des Stützkörpers 214 im Bereich oberhalb des Federkerns 255 kann dadurch erfolgen, daß eine Zwischenlage 270 eingelegt wird, die zu einer rascheren Abkühlung des Kunststoffschaums und damit zu einem höheren Raumgewicht desselben führt. Es ist aber auch möglich, durch entsprechende Temperatursteuerungen diesen Bereich der Form bei der Herstellung des Stützkörpers ein rascheres Aushärten und somit eine höhere Dichte bzw. die Bildung einer dickeren Haut zu ermöglichen. Diese dickere Haut hat den Vorteil, daß sie eine höhere Anzahl an geschlossenen Zellen aufweist.

## Patentansprüche

1. Sitz (201), insbesondere für Fahrzeuge, mit einem Polster aus Schaumkunststoff, der einen Stützkörper (214) aus einem offenzelligen, elastischen Kunststoffschaum in dem im Bereich der stärker beanspruchten Zone eine Stützvorrichtung (254), insbesondere ein Federkern (255), z. B. aus Metalldraht, eingeschäumt ist und einen schwer entflammbaren Bezugsstoff (207) aufweist, die miteinander verbunden, insbesondere stellenweise verklebt sind, dadurch gekennzeichnet, daß im Stützkörper (214) von einer Seiten- und bzw. oder Rückfläche (17,18,246,251) desselben sich in Richtung der gegenüberliegenden Seiten- und bzw. Oberfläche erstreckende Ausnehmungen (20,27-31,216,234) angeordnet sind und unterschiedliche, voneinander distanzierte, parallel und/oder senkrecht zu einer Oberfläche verlaufende Querschnittscheiben des Stützkörpers (214) eine gleiche Dicke und ein unterschiedliches Gewicht und/oder Verhältnis zwischen Ausnehmungen (216) und Kunststoffstoffschaum aufweisen.

2. Sitz (201), insbesondere für Fahrzeuge, mit einem Polster aus Schaumkunststoff der einen Stützkörper (214) aus einem offenzelligen, elastischen Kunststoffstoffschaum in dem im Bereich der stärker beanspruchten Zone eine Stützvorrichtung (254), insbesondere ein Federkern (255), z. B. aus Metalldraht, eingeschäumt ist und einen schwer entflammbaren Bezugsstoff (207) aufweist, die miteinander verbunden, insbesondere stellenweise verklebt sind, dadurch gekennzeichnet, daß der Stützkörper (214) ein erstes Raumgewicht aufweist und auf einer Sitzfläche (233) und Seitenflächen (246) eine Flammschutzschicht (208) aus einem offenzelligen, elastischen Kunststoffstoffschaum mit einem zweiten zum ersten unterschiedlichen Raumgewicht und ein schwer entflammbarer Bezugsstoff (207) angeordnet ist, die miteinander verbunden, insbesondere stellenweise verklebt sind.

3. Sitz (201) nach einem der Ansprüche 1 oder 2, dadurch gekennzeichnet, daß eine Oberseite des mit Ausnehmungen (216) versehenen Stützkörpers (214) bzw. der Flammschutzschichte (208) von einer Deckfläche (256) des Federkerns (255) distanziert, insbesondere in einem Abstand von 5 bis 70 mm angeordnet ist.

4. Sitz (201) nach einem oder mehreren der Ansprüche 1 bis 3, dadurch gekennzeichnet, daß im Bereich der im Stützkörper (214) angeordneten Ausnehmungen (216) bzw. unterhalb der Flammschutzschicht (208) eine Höhe (267) des darin eingeschäumten Federkerns (255) geringer ist, als eine Dicke (268) des Federkerns (255) im unbelasteten Zustand.

5. Sitz (201) nach Anspruch 4, dadurch gekennzeichnet, daß die Basisfläche (258) und die Deckfläche (256) des Federkerns (255) über Spannelemente (269) voneinander distanziert sind, deren senkrecht zur Basisfläche (258) verlaufende Länge geringer ist, als eine Dicke (268) des Federkerns (255) im unbelasteten Zustand.

6. Sitz (201) nach einem oder mehreren der Ansprüche 1 bis 5, dadurch gekennzeichnet, daß Seitenflächen (246) und eine hintere Stirnseite des Stützkörpers (214) von Stirnseitenkanten des Federkerns (255) in einer Distanz angeordnet sind und im Stützkörper (214) zwischen den Seitenkanten des Federkerns (255) und den Seitenflächen (246) des Stützkörpers (214) senkrecht zur Ober- und/oder Seitenfläche des Stützkörpers (214) verlaufende Ausnehmungen (216,234,259,260) angeordnet sind.

7. Sitz (201) nach einem oder mehreren der Ansprüche 1 bis 6, dadurch gekennzeichnet, daß der die Ausnehmungen (216) aufnehmenden Kunststoffschaum des Stützkörpers (214) mit einem insbesondere pulverförmigen Flammschutzmittel versetzt und vorzugsweise einstückig ausgebildet ist.

8. Sitz (201) nach Anspruch 1, dadurch gekennzeichnet, daß im Stützkörper (214) von einer Seiten- und bzw. oder Rückfläche (17,18,246,251) desselben sich in Richtung der gegenüberliegenden Seiten- und bzw. Oberfläche erstreckende Ausnehmungen (20,27-31,216,234) angeordnet sind.

9. Sitz (201) nach einem oder mehreren der Ansprüche 1 bis 8, dadurch gekennzeichnet, daß die Ausnehmungen (216,234) im Bereich des Federkerns (255) senkrecht zu einer Seiten- und bzw. oder Oberfläche (246) des Sitzpolsters (204) verlaufen.

10. Sitz (201) nach einem oder mehreren der Ansprüche 1 bis 9, dadurch gekennzeichnet, daß eine Oberfläche der Ausnehmungen (259,260) distanziert vom Federkern (255) bzw. Teilen des Federkerns angeordnet ist.

11. Sitz (201) nach einem oder mehreren der Ansprüche 1 bis 10, dadurch gekennzeichnet, daß die Flammschutzschicht (211,208) eine Eingangsöffnung der Ausnehmungen (216, 234) im Bereich der Seiten- und/oder Rückfläche (246, 251) des Stützkörpers (214) überdeckt.

## Claims

1. Seat (201), in particular for vehicles, with a padding of foamed plastics, into which a supporting body (214) of a open-celled, elastic plastic foam, in particular a spring core (255), e.g. from metal wire, is foamed into the region of a more intensely stressed zone of a supporting device (254) and comprising a flame-resistant upholstery material (207), which are connected in particular are glued in places together, characterized in that recesses (20, 27-31, 216, 234) are arranged in the supporting body (214) extending from a lateral face and/or rear face (17, 18, 246, 251) thereof in the direction of the opposite lateral face and/or upper face and that different cross-sectional slices of the supporting body (214) which are at a distance from each other, run parallel and/or vertically to a upper face, have an identical thickness and a different weight and/or ratio between recesses (216) and foamed plastics.

2. Seat (201), in particular for vehicles, with a padding of foamed plastics, into which a supporting body (214) of an open-celled, elastic plastic foam, in particular a spring core (255), e.g. from metal wire, is foamed into the region of a more intensely stressed zone of a supporting device (254) and comprising a flame-resistant upholstery material (207), which are connected in particular are glued in places together, characterized in that the supporting body (214) has a first specific gravity and comprises arranged on a seat surface (233) and lateral faces (246) a flame-retardant layer (208) of an open-celled, elastic plastic foam with a second specific gravity different from the first and a flame-resistant upholstery material (207), which are connected with each other, in particular are glued in places together.

3. Seat (201) according to one of claims 1 or 2, characterized in that a upper side of the supporting body (214) provided with recesses (216) or the flame-retardant layer (208) is arranged spaced apart from a cover face (256) of the spring core (255), in particular at a distance of 5 to 70 mm.

4. Seat (201) according to one or more of claims 1 to 3, characterized in that in the region of the recesses (216) which are arranged in the supporting body (214) or below the flame-retardant layer (208), a height (267) of the spring core (255) which is foamed into it, is less than a thickness (268) of the spring core (255) in unstressed state.

5. Seat (201) according to claim 4, characterized in that the base face (258) and the cover face (256) of the spring core (255) are spaced apart from each other by means of tensioning elements (269) having a length running vertically to the base face (258) smaller than a thickness (268) of the spring core (255) in unstressed state.

6. Seat (201) according to one or more of claims 1 to 5, characterized in that the lateral faces (246) and a rear front face of the supporting body (214) are arranged at a distance from the front lateral edges of the spring core (255) and in that in the supporting body (214) between the lateral edges of the spring core (255) and the lateral faces (246) of the supporting body (214), recesses (216, 234, 259, 260) are arranged running vertically to the upper face and/or lateral face of the supporting body (214).

7. Seat (201) according to one or more of claims 1 to 6, characterized in that the foamed plastics of the supporting body (214) receiving the recesses (216) is mixed in particular with a pulverulent flame retardant and preferably is constructed in one piece.

8. Seat (201) according to claim 1, characterized in that recesses (20, 27 - 31, 216, 234) are arranged in the supporting body (214) extending from a lateral face and/or rear face (17, 18, 246, 251) thereof in the direction of the opposite lateral face and/or upper face.

9. Seat (201) according to one or more of claims 1 to 8, characterized in that in the region of the spring core (255) recesses (216, 234) are arranged running perpendicular to a lateral face and/or upper face (246) of the seat cushion (204).

10. Seat (201) according to one or more of claims 1 to 9, characterized in that an upper face of the recesses (259, 260) is arranged at a distance from the spring core (255) or from parts of the spring core.

11. Seat (201) according to one or more of claims 1 to 10, characterized in that the flame-retardant layer (211, 208) covers an inlet opening of the recesses (216, 234) in the region of the lateral face and/or rear face (246, 251) of the supporting body (214).

## Revendications

1. Siège (201), en particulier pour véhicules, avec un rembourrage en matière synthétique, dont dans un corps d'appui (214) en une mousse de matière synthétique élastique à alvéoles ouverts, au voisinage de la zone plus fortement sollicitée est inséré, par moussage, un dispositif support (254), en particulier un noyau à ressort (255), par exemple en fil métallique et qui comporte une matière de revêtement (207) difficilement inflammable, qui sont reliés entre eux, en particulier collés ensemble par places, caractérisé en ce que dans le corps d'appui (214) sont disposés des évidements (20, 27-31, 216, 234) s'étendant depuis une face latérale et/ou face arrière (17, 18, 246, 251) de celui-ci en direction de la face latérale et/ou surface opposée, et que des tranches transversales différentes du corps d'appui (214), espacées les unes des autres, s'étendant parallèlement et/ou perpendiculairement à une surface, présentent une épaisseur égale et un poids différent et/ou un rapport différent entre évidements (216) et matière synthétique mousse.

2. Siège (201), en particulier pour véhicules, avec un rembourrage en matière synthétique, dont dans un corps d'appui (214) en une mousse de matière synthétique élastique à alvéoles ouverts, au voisinage de la zone plus fortement sollicitée est inséré, par moussage, un dispositif support (254), en particulier un noyau à ressort (255), par exemple en fil métallique, et qui comporte une matière de revêtement (207) difficilement inflammable, qui sont reliés entre eux, en particulier collés ensemble par places, caractérisé en ce que le corps d'appui (214) a un premier poids spécifique et une couche pare-flamme (208) en une matière synthétique mousse élastique à cellules ouvertes est disposée sur une surface de siège (233) et sur les surfaces latérales (246) qui a un second poids spécifique différent du premier et une matière de revêtement (207) difficilement inflammable est disposée, qui sont reliées entre elles, en particulier collées ensemble par places.

3. Siège (201), selon la revendication 1 ou 2, caractérisé en ce qu'une surface supérieure du corps d'appui (214) pourvue des évidements (216) ou de la couche pare-flamme (208) est agencée à une distance d'une surface de recouvrement (256) du noyau à ressort (255), en particulier à une distance comprise entre 5 et 70 mm.

4. Siège (201), selon une ou plusieurs des revendications 1 à 3, caractérisé en ce qu'au voisinage des évidements (216) agencés dans le corps d'appui (214) ou, respectivement en dessous de la couche pare-flamme (208), une hauteur (267) du noyau à ressort (255) qui y est inséré par moussage, est plus petite que l'épaisseur (268) du noyau à ressort (255) à l'état non chargé.

5. Siège (201) selon la revendication 4, caractérisé en ce que la surface de base (258) et la surface de recouvrement (256) du noyau à ressort (255) sont écartées l'une de l'autre par des éléments tendeurs (269), dont la longueur perpendiculaire à la surface de base (258) est plus petite que l'épaisseur (268) du noyau à ressort (255) à l'état non chargé.

6. Siège (201) selon une ou plusieurs des revendications 1 à 5, caractérisé en ce que les faces latérales (246) et un côté frontal arrière du corps d'appui (224) sont disposés en étant réparties à une certaine distance des bords latéraux de front du noyau à ressort (255) et dans le corps d'appui (214) entre les bords latéraux du noyau à ressort (255) et les faces latérales (246) du corps d'appui (214) perpendiculairement à la surface supérieure et/ou aux faces latérales du corps d'appui (214) des évidements (216, 234, 259, 260) sont agencés.

7. Siège (201) selon une ou plusieurs des revendications 1 à 6, caractérisé en ce que la mousse de matière synthétique du corps d'appui (214) qui reçoit les évidements (216) est mélangée avec un agent de protection antiflamme en particulier pulvérulent et en ce que, de préférence, ledit corps est réalisé en une seule pièce.

8. Siège (201) selon la revendication 1, caractérisé en ce que des évidements (20, 27 - 31, 216, 234) sont agencés dans le corps d'appui (214) s'étendant depuis une face latérale et/ou arrière (17, 18, 246, 251) de celui-ci en direction de la face latérale et/ou surface opposée.

9. Siège (201) selon une ou plusieurs des revendications 1 à 8, caractérisé en ce que les évidements (216, 234) sont agencés dans la zone du noyau à ressort (255) perpendiculairement à une face latérale et/ou une surface (246) du rembourrage de siège (204).

10. Siège (201) selon une ou plusieurs des revendications 1 à 9, caractérisé en ce qu'une surface des évidements (259, 260) est éloignée du noyau à ressort (255) ou, respectivement, de parties du noyau à ressort.

11. Siège (201) selon une ou plusieurs des revendications 1 à 10, caractérisé en ce que la couche pare-flamme (211, 208) recouvre une ouverture d'entrée des évidements (216, 234) dans la zone des faces latérales et/ou de la face arrière (246, 251) du corps d'appui (214).
